(19) **Europäisches Patentamt**

**European Patent Office**

**Office européen des brevets**

(11) **EP 4 373 017 A1**

(12) **EUROPEAN PATENT APPLICATION**
published in accordance with Art. 153(4) EPC

(43) Date of publication:
**22.05.2024 Bulletin 2024/21**

(21) Application number: **22842357.0**

(22) Date of filing: **05.07.2022**

(51) International Patent Classification (IPC):
*H04L 1/00* (2006.01)   *H04L 5/00* (2006.01)
*H04B 7/06* (2006.01)   *H04B 17/309* (2015.01)
*H04W 24/10* (2009.01)   *G06N 20/00* (2019.01)

(52) Cooperative Patent Classification (CPC):
**G06N 20/00; H04B 7/06; H04B 17/309; H04L 1/00; H04L 5/00; H04W 24/10**

(86) International application number:
**PCT/KR2022/009647**

(87) International publication number:
**WO 2023/287095 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.07.2021 KR 20210092983**

(71) Applicant: **LG Electronics Inc.**
**Yeongdeungpo-gu**
**Seoul 07336 (KR)**

(72) Inventors:
• **PARK, Haewook**
  **Seoul 06772 (KR)**
• **KANG, Jiwon**
  **Seoul 06772 (KR)**
• **KIM, Kijun**
  **Seoul 06772 (KR)**
• **KIM, Hyungtae**
  **Seoul 06772 (KR)**

(74) Representative: **Frenkel, Matthias Alexander**
**Wuesthoff & Wuesthoff**
**Patentanwälte und Rechtsanwalt PartG mbB**
**Schweigerstraße 2**
**81541 München (DE)**

(54) **METHOD AND DEVICE FOR TRANSMITTING OR RECEIVING CHANNEL STATE INFORMATION IN WIRELESS COMMUNICATION SYSTEM**

(57)    A method and a device for reporting channel state information (CSI) in a wireless communication system are disclosed. The method for performing CSI reporting by a terminal according to an embodiment of the present disclosure may comprise the steps of: receiving configuration information related to the CSI reporting from a base station; receiving control information based on the configuration information from the base station; and performing the CSI reporting on the basis of the configuration information and the control information, wherein on the basis that data scheduling by the base station is to be performed after the CSI reporting, the CSI reporting is based on information on a channel state at a timing of the data scheduling.

FIG.20

**Description**

[Technical Field]

The present disclosure relates to a wireless communication system, and more particularly, to a method and a device for transmitting and receiving channel state information in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

[Disclosure]

[Technical Problem]

A technical object of the present disclosure is to provide a method and a device for transmitting and receiving channel state information in a wireless communication system.

In addition, an additional technical object of the present disclosure is to provide a method and a device for transmitting and receiving channel state information considering a channel state at a data scheduling timing in an advanced wireless communication system.

In addition, an additional technical object of the present disclosure is to provide a method and a device for transmitting and receiving information related to omission of channel state information in an advanced wireless communication system.

The technical objects to be achieved by the present disclosure are not limited to the above-described technical objects, and other technical objects which are not described herein will be clearly understood by those skilled in the pertinent art from the following description.

[Technical Solution]

A method for performing channel state information (CSI) reporting by a terminal in a wireless communication system according to an aspect of the present disclosure includes receiving configuration information related to the CSI reporting from a base station; receiving control information based on the configuration information from the base station; and performing the CSI reporting based on the configuration information and the control information, and on a basis that data scheduling by the base station will be performed after the CSI reporting, the CSI reporting may be based on information on a channel state at a timing of the data scheduling.

A method for receiving channel state information (CSI) reporting by a base station in a wireless communication system according to an additional aspect of the present disclosure includes transmitting configuration information related to the CSI reporting to a terminal; transmitting control information based on the configuration information to the terminal; and receiving the CSI reporting based on the configuration information and the control information from the terminal, and on a basis that data scheduling by the base station will be performed after the CSI reporting, the CSI reporting may be based on information on a channel state at a timing of the data scheduling.

[Technical Effects]

According to an embodiment of the present disclosure, channel state measurement and channel state information reporting according to advanced wireless communication system-based prediction/optimization may be supported.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates a method of multiple TRPs transmission in a wireless communication system to which the present disclosure may be applied.
FIG. 8 is a diagram illustrating a downlink transmission and reception operation in a wireless communication system to which the present disclosure can be applied.
FIG. 9 is a diagram illustrating an uplink transmission and reception operation in a wireless communication system to which the present disclosure can be applied.
FIG. 10 illustrates a classification of artificial intelligence.
FIG. 11 illustrates a feed-forward neural network.
FIG. 12 illustrates a recurrent neural network.
FIG. 13 illustrates a convolutional neural network.
FIG. 14 illustrates an auto encoder.
FIG. 15 illustrates a functional framework for an AI operation.
FIG. 16 is a diagram illustrating split AI inference.
FIG. 17 illustrates an application of a functional framework in a wireless communication system.
FIG. 18 illustrates an application of a functional framework in a wireless communication system.
FIG. 19 illustrates an application of a functional framework in a wireless communication system.
FIG. 20 is a diagram illustrating a signaling procedure between a base station and a terminal for a channel state information reporting method according to an embodiment of the present disclosure.
FIG. 21 is a diagram illustrating an operation of a terminal for a channel state information reporting method according to an embodiment of the present disclosure.
FIG. 22 is a diagram illustrating an operation of a base station for a channel state information reporting method according to an embodiment of the present disclosure.
FIG. 23 is a diagram which illustrates a block diagram of a wireless communication device according to an embodiment of the present disclosure.

[Best Model

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, ">ooc" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator

CRI: channel state information - reference signal resource indicator

CSI: channel state information

CSI-IM: channel state information - interference measurement

CSI-RS: channel state information - reference signal

DMRS: demodulation reference signal

FDM: frequency division multiplexing

FFT: fast Fourier transform

IFDMA: interleaved frequency division multiple access

IFFT: inverse fast Fourier transform

L1-RSRP: Layer 1 reference signal received power

L1-RSRQ: Layer 1 reference signal received quality

MAC: medium access control

NZP: non-zero power

OFDM: orthogonal frequency division multiplexing

PDCCH: physical downlink control channel

PDSCH: physical downlink shared channel

PMI: precoding matrix indicator

RE: resource element

RI: Rank indicator

RRC: radio resource control

RSSI: received signal strength indicator

Rx: Reception

QCL: quasi co-location

SINR: signal to interference and noise ratio

SSB (or SS/PBCH block): Synchronization signal block (including PSS (primary synchronization signal), SSS (secondary synchronization signal) and PBCH (physical broadcast channel))

TDM: time division multiplexing

TRP: transmission and reception point

TRS: tracking reference signal

Tx: transmission

UE: user equipment

ZP: zero power

<u>Overall System</u>

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

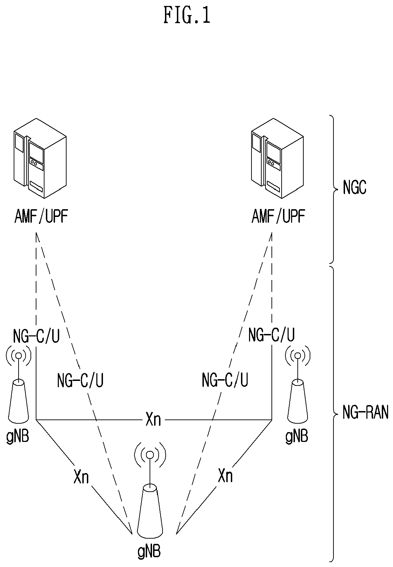

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

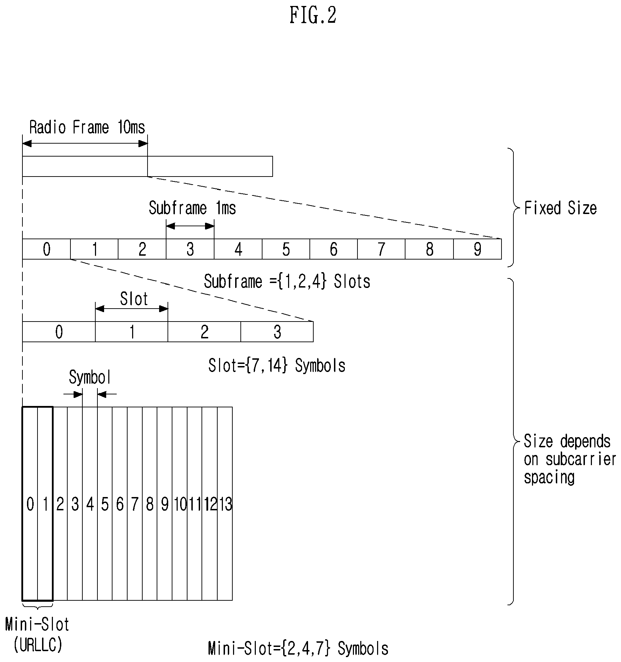

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f = 2^{\mu} \cdot 15$ [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} N_f / 100) \cdot T_c = 10$ms. Here, a radio frame is configured with 10 subframes having a duration of $T_{sf} = (\Delta f_{max} N_f / 1000) \cdot T_c = 1$ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration $\mu$, slots are numbered in an increasing order of $n_s^{\mu} \in \{0,..., N_{slot}^{subframe,\mu} - 1\}$ in a subframe and are numbered in an increasing order of $n_{s,f}^{\mu} \in \{0,..., N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu} N_{symb}^{slot}$ in the same subframe. All terminals may not perform transmission and reception at the same time, which means that all OFDM symbols of a downlink slot or an uplink slot may not be used.

Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |

(continued)

| μ | $N_{symb}^{slot}$ | $N_{slot}^{frame,\mu}$ | $N_{slot}^{subframe,\mu}$ |
|---|---|---|---|
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on μ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

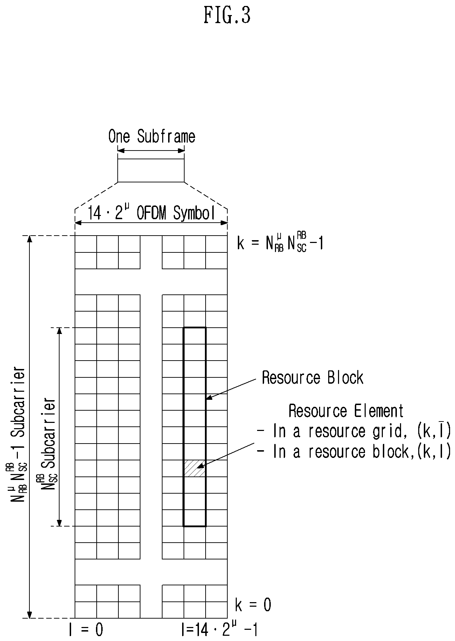

FIG. 3 illustrates a resource grid in a wireless communication system to which the present disclosure may be applied.

In reference to FIG. 3, it is illustratively described that a resource grid is configured with $N_{RB}^{N}N_{sc}^{RB}$ subcarriers in a frequency domain and one subframe is configured with $14·2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{N}N_{sc}^{RB}$ subcarriers. Here, $N_{RB}^{\mu}≤N_{RB}^{max,\mu}$. The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k,l'). Here, $k=0,...,N_{RB}^{\mu}N_{sc}^{RB}-1$ is an index in a frequency domain and $l'=0,...,2^{\mu}N_{symb}^{(\mu)}-1$ refers to a position of a symbol in a subframe. When referring to a resource element in a slot, an index pair (k,l) is used. Here, $l=0,...,N_{symb}^{\mu}-1$. A resource element (k,l') for μ and an antenna port p corresponds to a complex value, $a_{k,l'}^{(p,\mu)}$. When there is no risk of confusion or when a specific antenna port or numerology is not specified, indexes p and μ may be dropped, whereupon a complex value may be $a_{k,l'}^{(p)}$ or $a_{k,l'}$. In addition, a resource block (RB) is defined as $N_{sc}^{RB}=12$ consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration μ. The center of subcarrier 0 of common resource block 0 for a subcarrier spacing configuration μ is identical to 'point A'. A relationship between a common resource block number $n_{CRB}^{\mu}$ and a resource element (k,l) for a subcarrier spacing configuration μ in a frequency domain is given as in the following Equation 1.

**【Equation 1】**

$$n_{CRB}^{\mu} = \left\lfloor \frac{k}{N_{sc}^{RB}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

**【Equation 2】**

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

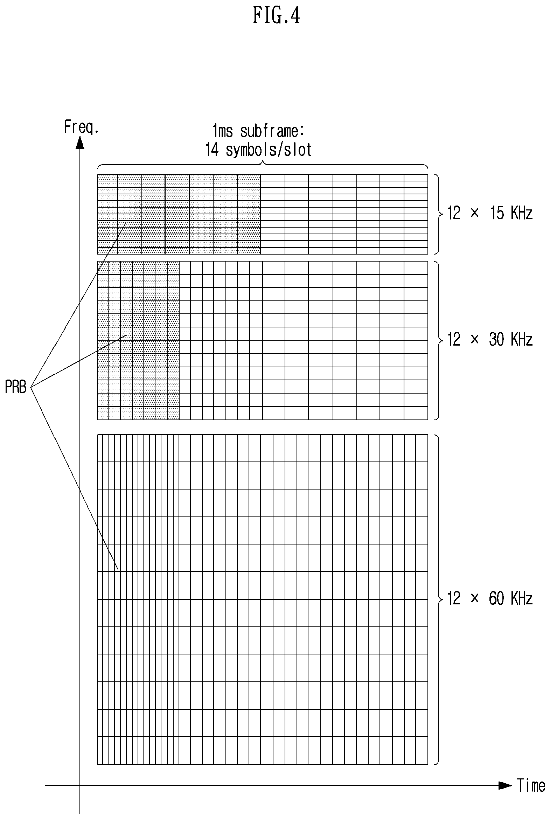

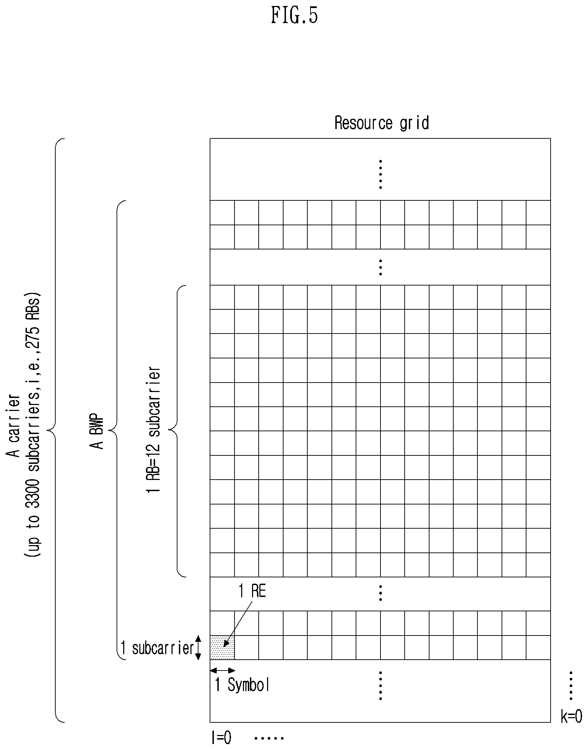

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

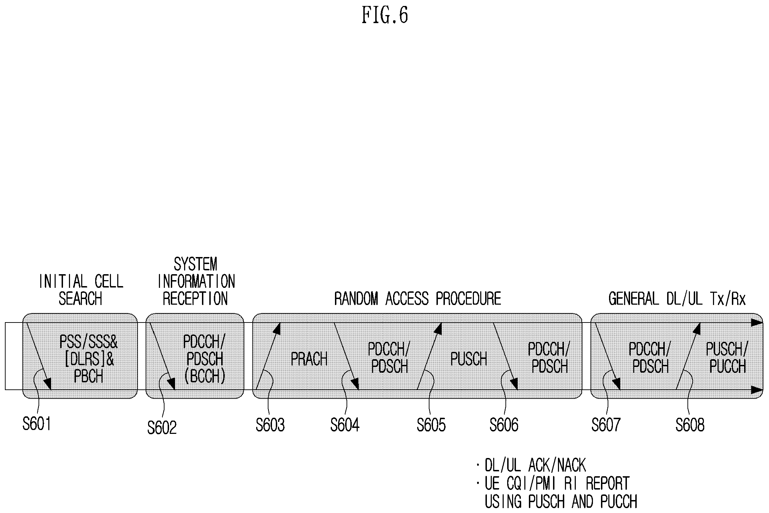

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
| --- | --- |
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

Operation related to Multi-TRPs

A coordinated multi point (CoMP) scheme refers to a scheme in which a plurality of base stations effectively control interference by exchanging (e.g., using an X2 interface) or utilizing channel information (e.g., RI/CQI/PMI/LI(layer indicator), etc.) fed back by a terminal and cooperatively transmitting to a terminal. According to a scheme used, a CoMP may be classified into joint transmission(JT), coordinated Scheduling(CS), coordinated Beamforming(CB), dynamic Point Selection(DPS), dynamic Point Blocking(DPB), etc.

M-TRP transmission schemes that M TRPs transmit data to one terminal may be largely classified into i) eMBB M-TRP transmission, a scheme for improving a transfer rate, and ii) URLLC M-TRP transmission, a scheme for increasing a reception success rate and reducing latency.

In addition, with regard to DCI transmission, M-TRP transmission schemes may be classified into i) M-TRP transmission based on M-DCI(multiple DCI) that each TRP transmits different DCIs and ii) M-TRP transmission based on S-DCI(single DCI) that one TRP transmits DCI. For example, for S-DCI based M-TRP transmission, all scheduling information on data transmitted by M TRPs should be delivered to a terminal through one DCI, it may be used in an environment of an ideal BackHaul (ideal BH) where dynamic cooperation between two TRPs is possible.

For TDM based URLLC M-TRP transmission, scheme 3/4 is under discussion for standardization. Specifically, scheme 4 means a scheme in which one TRP transmits a transport block(TB) in one slot and it has an effect to improve a probability of data reception through the same TB received from multiple TRPs in multiple slots. Meanwhile, scheme 3 means a scheme in which one TRP transmits a TB through consecutive number of OFDM symbols (i.e., a symbol group) and TRPs may be configured to transmit the same TB through a different symbol group in one slot.

In addition, UE may recognize PUSCH (or PUCCH) scheduled by DCI received in different control resource sets(CORESETs)(or CORESETs belonging to different CORESET groups) as PUSCH (or PUCCH) transmitted to different TRPs or may recognize PDSCH (or PDCCH) from different TRPs. In addition, the below-described method for UL transmission (e.g., PUSCH/PUCCH) transmitted to different TRPs may be applied equivalently to UL transmission (e.g., PUSCH/PUCCH)transmitted to different panels belonging to the same TRP.

In addition, MTRP-URLLC may mean that a M TRPs transmit the same transport block(TB) by using different layer/time/frequency. A UE configured with a MTRP-URLLC transmission scheme receives an indication on multiple TCI state(s) through DCI and may assume that data received by using a QCL RS of each TCI state are the same TB. On the other hand, MTRP-eMBB may mean that M TRPs transmit different TBs by using different layer/time/frequency. A UE configured with a MTRP-eMBB transmission scheme receives an indication on multiple TCI state(s) through DCI and may assume that data received by using a QCL RS of each TCI state are different TBs. In this regard, as UE separately classifies and uses a RNTI configured for MTRP-URLLC and a RNTI configured for MTRP-eMBB, it may decide/determine whether the corresponding M-TRP transmission is URLLC transmission or eMBB transmission. In other words, when CRC masking of DCI received by UE is performed by using a RNTI configured for MTRP-URLLC, it may correspond to URLLC transmission, and when CRC masking of DCI is performed by using a RNTI configured for MTRP-eMBB, it may correspond to eMBB transmission.

Hereinafter, a CORESET group ID described/mentioned in the present disclosure may mean an index/identification information (e.g., an ID, etc.) for distinguishing a CORESET for each TRP/panel. In addition, a CORESET group may be a group/union of CORESET distinguished by an index/identification information (e.g., an ID)/the CORESET group ID, etc. for distinguishing a CORESET for each TRP/panel. In an example, a CORESET group ID may be specific index information defined in a CORESET configuration. In this case, a CORESET group may be configured/indicated/defined by an index defined in a CORESET configuration for each CORESET. Additionally/alternatively, a CORESET group ID may mean an index/identification information/an indicator, etc. for distinguishment/identification between CORESETs configured/associated with each TRP/panel. Hereinafter, a CORESET group ID described/mentioned in the present disclosure may be expressed by being substituted with a specific index/specific identification information/a specific indicator for distinguishment/identification between CORESETs configured/associated with each TRP/panel. The CORESET group ID, i.e., a specific index/specific identification information/a specific indicator for distinguishment/identification between CORESETs configured/associated with each TRP/panel may be configured/indicated to a terminal through higher layer signaling (e.g., RRC signaling)/L2 signaling (e.g., MAC-CE)/L1 signaling (e.g., DCI), etc. In an example, it may be configured/indicated so that PDCCH detection will be performed per each TRP/panel in a unit of a corresponding CORESET group (i.e., per TRP/panel belonging to the same CORESET group). Additionally/alternatively, it may be configured/indicated so that uplink control information (e.g., CSI, HARQ-A/N(ACK/NACK), SR(scheduling request)) and/or uplink physical channel resources (e.g., PUCCH/PRACH/SRS resources) are separated and managed/controlled per each TRP/panel in a unit of a corresponding CORESET group (i.e., per TRP/panel belonging to the same CORESET group). Additionally/alternatively, HARQ A/N(process/retransmission) for PDSCH/PUSCH, etc. scheduled per each TRP/panel may be managed per corresponding CORESET group (i.e., per TRP/panel belonging to the same CORESET group).

For example, a higher layer parameter, ControlResourceSet information element (IE), is used to configure a time/frequency control resource set (CORESET). In an example, the control resource set (CORESET) may be related to detection and reception of downlink control information. The ControlResourceSet IE may include a CORESET-related ID (e.g., controlResourceSetID)/an index of a CORESET pool for a CORESET (e.g., CORESETPoolIndex)/a time/frequency resource configuration of a CORESET/TCI information related to a CORESET, etc. In an example, an index of a CORESET pool (e.g., CORESETPoolIndex) may be configured as 0 or 1. In the description, a CORESET group may correspond to a CORESET pool and a CORESET group ID may correspond to a CORESET pool index (e.g., CORESETPoolIndex).

NCJT(Non-coherent joint transmission) is a scheme in which a plurality of transmission points (TP) transmit data to one terminal by using the same time frequency resource, TPs transmit data by using a different DMRS(Demodulation Multiplexing Reference Signal) between TPs through a different layer (i.e., through a different DMRS port).

A TP delivers data scheduling information through DCI to a terminal receiving NCJT. Here, a scheme in which each TP participating in NCJT delivers scheduling information on data transmitted by itself through DCI is referred to as 'multi DCI based NCJT'. As each of N TPs participating in NCJT transmission transmits DL grant DCI and a PDSCH to UE, UE receives N DCI and N PDSCHs from N TPs. Meanwhile, a scheme in which one representative TP delivers scheduling information on data transmitted by itself and data transmitted by a different TP (i.e., a TP participating in NCJT) through one DCI is referred to as 'single DCI based NCJT'. Here, N TPs transmit one PDSCH, but each TP transmits only some layers of multiple layers included in one PDSCH. For example, when 4-layer data is transmitted, TP 1 may transmit 2 layers and TP 2 may transmit 2 remaining layers to UE.

Hereinafter, partially overlapped NCJT will be described.

In addition, NCJT may be classified into fully overlapped NCJT that time frequency resources transmitted by each TP are fully overlapped and partially overlapped NCJT that only some time frequency resources are overlapped. In other words, for partially overlapped NCJT, data of both of TP 1 and TP 2 are transmitted in some time frequency resources and data of only one TP of TP 1 or TP 2 is transmitted in remaining time frequency resources.

Hereinafter, a method for improving reliability in Multi-TRP will be described.

As a transmission and reception method for improving reliability using transmission in a plurality of TRPs, the following two methods may be considered.

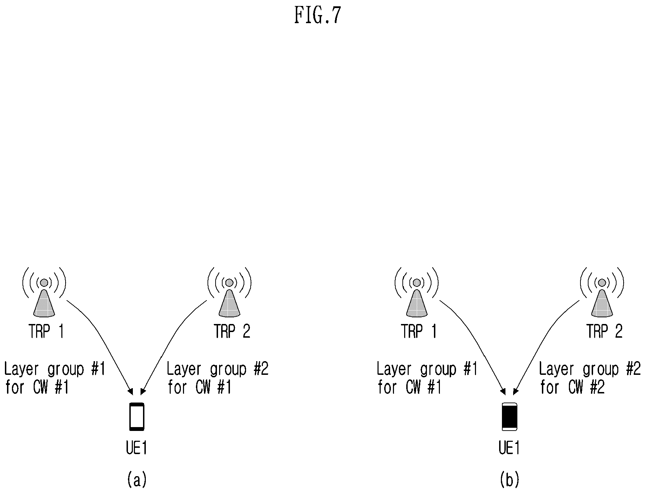

FIG. 7 illustrates a method of multiple TRPs transmission in a wireless communication system to which the present disclosure may be applied.

In reference to FIG. 7(a), it is shown a case in which layer groups transmitting the same codeword(CW)/transport block(TB) correspond to different TRPs. Here, a layer group may mean a predetermined layer set including one or more layers. In this case, there is an advantage that the amount of transmitted resources increases due to the number of a plurality of layers and thereby a robust channel coding with a low coding rate may be used for a TB, and additionally, because a plurality of TRPs have different channels, it may be expected to improve reliability of a received signal based on a diversity gain.

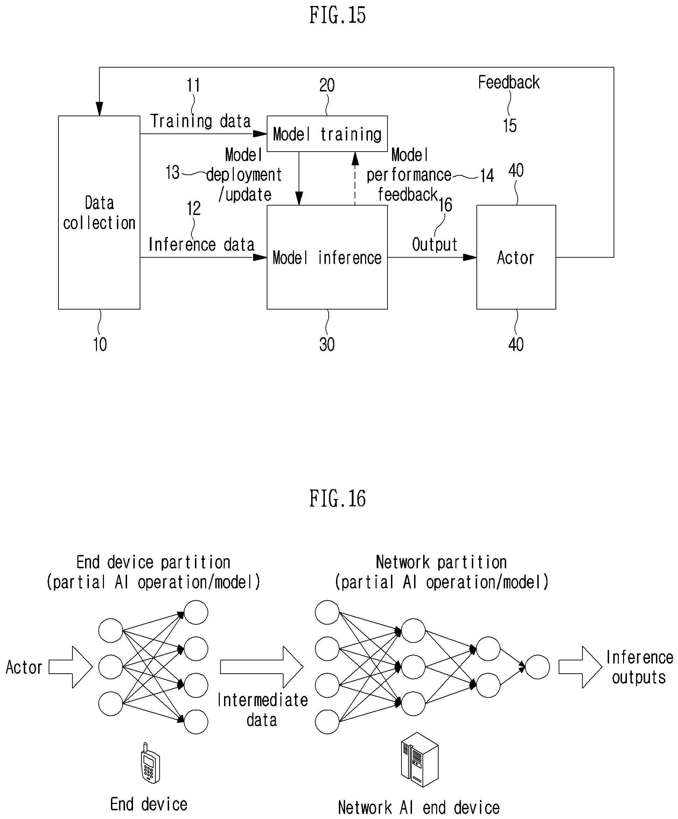

In reference to FIG. 7(b), an example that different CWs are transmitted through layer groups corresponding to different TRPs is shown. Here, it may be assumed that a TB corresponding to CW #1 and CW #2 in the drawing is identical to each other. In other words, CW #1 and CW #2 mean that the same TB is respectively transformed through channel coding, etc. into different CWs by different TRPs. Accordingly, it may be considered as an example that the same TB is repetitively transmitted. In case of FIG. 15(b), it may have a disadvantage that a code rate corresponding to a TB is higher compared to FIG. 15(a). However, it has an advantage that it may adjust a code rate by indicating a different RV (redundancy version) value or may adjust a modulation order of each CW for encoded bits generated from the same TB according to a channel environment.

According to methods illustrated in FIG. 7(a) and FIG. 7(b) above, probability of data reception of a terminal may be improved as the same TB is repetitively transmitted through a different layer group and each layer group is transmitted by a different TRP/panel. It is referred to as a SDM (Spatial Division Multiplexing) based M-TRP URLLC transmission method. Layers belonging to different layer groups are respectively transmitted through DMRS ports belonging to different DMRS CDM groups.

In addition, the above-described contents related to multiple TRPs are described based on an SDM (spatial division multiplexing) method using different layers, but it may be naturally extended and applied to a FDM (frequency division multiplexing) method based on a different frequency domain resource (e.g., RB/PRB (set), etc.) and/or a TDM (time division multiplexing) method based on a different time domain resource (e.g., a slot, a symbol, a sub-symbol, etc.).

Downlink transmission and reception operation

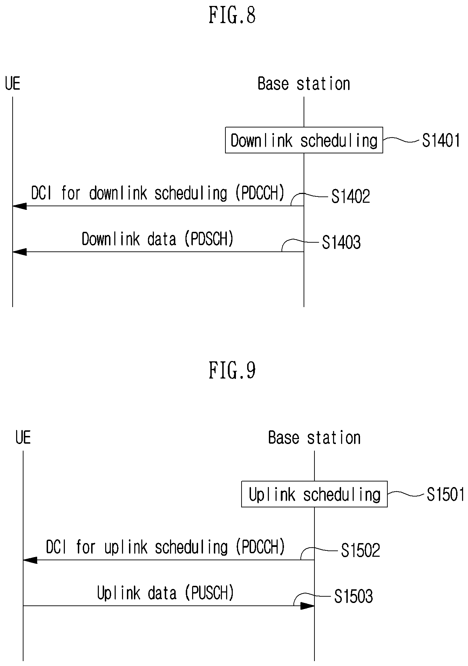

FIG. 8 is a diagram illustrating a downlink transmission and reception operation in a wireless communication system to which the present disclosure can be applied.

Referring to FIG. 8, a base station schedules downlink transmission such as a frequency/time resource, a transport layer, a downlink precoder, an MCS, etc. (S1401). In particular, a base station can determine a beam for PDSCH transmission to a UE through the operations described above.

A UE receives DCI for downlink scheduling (i.e., including scheduling information of a PDSCH) from a base station on a PDCCH (S1402).

DCI format 1_0, 1_1, or 1_2 may be used for downlink scheduling, and in particular, DCI format 1_1 includes the following information: an identifier for a DCI format, a bandwidth part indicator, a frequency domain resource assignment, a time domain resource assignment, a PRB bundling size indicator, a rate matching indicator, a ZP CSI-RS trigger, antenna port(s), a transmission configuration indication (TCI), an SRS request, a DMRS (Demodulation Reference Signal) sequence initialization

In particular, a number of DMRS ports may be scheduled according to each state indicated in an antenna port(s) field, and also single-user (SU)/multi-user (MU) user transmission scheduling is possible.

In addition, a TCI field is composed of 3 bits, and a QCL for a DMRS is dynamically indicated by indicating up to 8 TCI states according to a TCI field value.

A UE receives downlink data from a base station on a PDSCH (S1403).

When a UE detects a PDCCH including DCI formats 1_0, 1_1, and 1_2, it decodes a PDSCH according to indications by corresponding DCI.

Here, when a UE receives a PDSCH scheduled by DCI format 1, a DMRS configuration type may be configured for the UE by a higher layer parameter 'dmrs-Type', and a DMRS type is used to receive a PDSCH. In addition, a maximum number of front-loaded DMRA symbols for the PDSCH may be configured for a terminal by a higher layer parameter 'maxLength'.

For DMRS configuration type 1, if a single codeword is scheduled for a UE and an antenna port mapped to an index of {2, 9, 10, 11 or 30} is indicated or if a single codeword is scheduled and an antenna port mapped to an index of {2, 9, 10, 11 or 12} or {2, 9, 10, 11, 30 or 31} is indicated, or if two codewords are scheduled, the UE assumes that all remaining orthogonal antenna ports are not associated with PDSCH transmission to another UE.

Alternatively, for DMRS configuration type 1, if a single codeword is scheduled for a UE and an antenna port mapped to an index of {2, 10 or 23} is indicated, or if a single codeword is scheduled and an antenna port mapped to an index of {2, 10, 23 or 24} or {2, 10, 23 or 58} is indicated, or if two codewords are scheduled for a UE, the UE assumes that all remaining orthogonal antenna ports are not associated with PDSCH transmission to another UE.

When a UE receives a PDSCH, a precoding unit (precoding granularity) P' may be assumed to be a contiguous resource block in a frequency domain. Here, P' may correspond to one of {2, 4, wideband}.

If P' is determined to be wideband, a UE does not expect to be scheduled with non-contiguous PRBs, and a UE can assume that the same precoding is applied to allocated resources.

On the other hand, if P' is determined to be one of {2, 4}, a precoding resource block group (PRG) is divided into P' consecutive PRBs. An actual number of consecutive PRBs in each PRG may be one or more. A UE may assume that the same precoding is applied to consecutive downlink PRBs within a PRG.

In order for a UE to determine a modulation order, a target code rate, and a transport block size in a PDSCH, the UE first reads a 5-bit MCD field in DCI and determines a modulation order and a target code rate. Then, the UE reads a redundancy version field in the DCI and determines a redundancy version. Then, a UE determines a transport block size using a number of layers and a total number of allocated PRBs before rate matching.

Uplink transmission and reception operation

FIG. 9 is a diagram illustrating an uplink transmission and reception operation in a wireless communication system to which the present disclosure can be applied.

Referring to FIG. 9, a base station schedules uplink transmission such as a frequency/time resource, a transport layer, an uplink precoder, an MCS, etc. (S1501). In particular, a base station can determine a beam for PUSCH transmission to a UE through the operations described above.

A UE receives DCI for uplink scheduling (i.e., including scheduling information of a PUSCH) from a base station on a PDCCH (S1502).

DCI format 0_0, 0_1, or 0_2 may be used for uplink scheduling, and in particular, DCI format 0_1 includes the following information: an identifier for a DCI format, a UL/SUL (supplementary uplink) indicator, a bandwidth part indicator, a frequency domain resource assignment, a time domain resource assignment, a frequency hopping flag, a modulation and coding scheme (MCS), an SRS resource indicator (SRI), precoding information and number of layers, antenna port(s), an SRS request, a DMRS sequence initialization, a UL-SCH (Uplink Shared Channel) indicator

In particular, SRS resources configured in an SRS resource set associated with the higher upper layer parameter 'usage' may be indicated by an SRS resource indicator field. Additionally, the 'spatialRelationInfo' can be configured for each SRS resource, and its value can be one of {CRI, SSB, SRI}.

A UE transmits uplink data to a base station on a PUSCH (S1503).

When a UE detects a PDCCH including DCI formats 0_0, 0_1, and 0_2, it transmits a PUSCH according to indications by corresponding DCI.

Two transmission methods are supported for PUSCH transmission: codebook-based transmission and non-codebook-based transmission:

i) When the higher layer parameter 'txConfig' is set to 'codebook', a UE is configured to codebook-based transmission. On the other hand, when the higher layer parameter 'txConfig' is set to 'nonCodebook', a UE is configured to non-codebook based transmission. If the up higher per layer parameter 'txConfig' is not set, a UE does not expect to be scheduled by DCI format 0_1. When a PUSCH is scheduled by DCI format 0_0, PUSCH transmission is based on a single antenna port.

For codebook-based transmission, a PUSCH may be scheduled in DCI format 0_0, DCI format 0_1, DCI format 0_2, or semi-statically. If this PUSCH is scheduled by DCI format 0_1, a UE determines a PUSCH transmission precoder based on an SRI, a TPMI (Transmit Precoding Matrix Indicator), and a transmission rank from DCI, as given by an SRS resource indicator field and a precoding information and number of layers field. A TPMI is used to indicate a precoder to be applied across antenna ports, and corresponds to an SRS resource selected by an SRI when multiple SRS resources are configured. Alternatively, if a single SRS resource is configured, a TPMI is used to indicate a precoder to be applied across antenna ports and corresponds to that single SRS resource. A transmission precoder is selected from an uplink codebook having the same number of antenna ports as the higher layer parameter 'nrofSRS-Ports'. When a UE is configured with the higher layer parameter 'txConfig' set to 'codebook', the UE is configured with at least one SRS resource. An SRI indicated in slot n is associated with the most recent transmission of an SRS resource identified by the SRI, where the SRS resource precedes a PDCCH carrying the SRI (i.e., slot n).

ii) For non-codebook based transmission, a PUSCH may be scheduled in DCI format 0_0, DCI format 0_1, or semi-statically. When multiple SRS resources are configured, a UE can determine a PUSCH precoder and a transmission rank based on a wideband SRI, where, the SRI is given by an SRS resource indicator in DCI or by the higher layer parameter 'srs-ResourceIndicator'. A UE uses one or multiple SRS resources for SRS transmission, where the number of SRS resources can be configured for simultaneous transmission within the same RB based on a UE capability. Only one SRS port is configured for each SRS resource. Only one SRS resource can be configured with the higher layer parameter 'usage' set to 'nonCodebook'. The maximum number of SRS resources that can be configured for non-codebook based uplink transmission is 4. An SRI indicated in slot n is associated with the most recent transmission of an SRS resource identified by the SRI, where the SRS transmission precedes a PDCCH carrying the SRI (i.e., slot n).

CSI-related Operation

In an NR (New Radio) system, a CSI-RS(channel state information-reference signal) is used for time and/or frequency tracking, CSI computation, L1(layer 1)-RSRP(reference signal received power) computation and mobility. Here, CSI computation is related to CSI acquisition and L1-RSRP computation is related to beam management (BM).

CSI(channel state information) collectively refers to information which may represent quality of a radio channel (or also referred to as a link) formed between a terminal and an antenna port.

- To perform one of the usages of a CSI-RS, a terminal (e.g., user equipment, UE) receives configuration information related to CSI from a base station (e.g., general Node B, gNB) through RRC(radio resource control) signaling.

The configuration information related to CSI may include at least one of information related to a CSI-IM (interference management) resource, information related to CSI measurement configuration, information related to CSI resource configuration, information related to a CSI-RS resource or information related to CSI report configuration.

i) Information related to a CSI-IM resource may include CSI-IM resource information, CSI-IM resource set information, etc. A CSI-IM resource set is identified by a CSI-IM resource set ID (identifier) and one resource set includes at least one CSI-IM resource. Each CSI-IM resource is identified by a CSI-IM resource ID.

ii) Information related to CSI resource configuration may be expressed as CSI-ResourceConfig IE. Information related to a CSI resource configuration defines a group which includes at least one of an NZP(non zero power) CSI-RS resource set, a CSI-IM resource set or a CSI-SSB resource set. In other words, the information related to a CSI resource configuration may include a CSI-RS resource set list and the CSI-RS resource set list may include at least one of a NZP CSI-RS resource set list, a CSI-IM resource set list or a CSI-SSB resource set list. A CSI-RS resource set is identified by a CSI-RS resource set ID and one resource set includes at least one CSI-RS resource. Each CSI-RS resource is identified by a CSI-RS resource ID.

Parameters representing a usage of a CSI-RS (e.g., a 'repetition' parameter related to BM, a 'trs-Info' parameter related to tracking) may be configured per NZP CSI-RS resource set.

iii) Information related to a CSI report configuration includes a report configuration type (reportConfigType) parameter representing a time domain behavior and a report quantity (reportQuantity) parameter representing CSI-related quantity for a report. The time domain behavior may be periodic, aperiodic or semi-persistent.

- A terminal measures CSI based on the configuration information related to CSI.

The CSI measurement may include (1) a process in which a terminal receives a CSI-RS and (2) a process in which CSI is computed through a received CSI-RS and detailed description thereon is described after.

For a CSI-RS, RE(resource element) mapping of a CSI-RS resource in a time and frequency domain is configured by higher layer parameter CSI-RS-ResourceMapping.

- A terminal reports the measured CSI to a base station.

In this case, when quantity of CSI-ReportConfig is configured as 'none (or No report)', the terminal may omit the report. But, although the quantity is configured as 'none (or No report)', the terminal may perform a report to a base station. When the quantity is configured as 'none', an aperiodic TRS is triggered or repetition is configured. In this case, only when repetition is configured as 'ON', a report of the terminal may be omitted.

CSI Measurement

An NR system supports more flexible and dynamic CSI measurement and reporting. Here, the CSI measurement may include a procedure of receiving a CSI-RS and acquiring CSI by computing a received CSI-RS.

As a time domain behavior of CSI measurement and reporting, aperiodic/semi-persistent/periodic CM (channel measurement) and IM (interference measurement) are supported. 4-port NZP CSI-RS RE pattern is used for CSI-IM configuration.

CSI-IM based IMR of NR has a design similar to CSI-IM of LTE and is configured independently from ZP CSI-RS resources for PDSCH rate matching. In addition, each port emulates an interference layer having (a desirable channel and) a precoded NZP CSI-RS in NZP CSI-RS-based IMR. As it is about intra-cell interference measurement for a multi-user case, MU interference is mainly targeted.

A base station transmits a precoded NZP CSI-RS to a terminal in each port of configured NZP CSI-RS based IMR.

A terminal assumes a channel/interference layer and measures interference for each port in a resource set.

When there is no PMI and RI feedback for a channel, a plurality of resources are configured in a set and a base station or a network indicates a subset of NZP CSI-RS resources through DCI for channel/interference measurement.

A resource setting and a resource setting configuration are described in more detail.

Resource Setting

Each CSI resource setting 'CSI-ResourceConfig' includes a configuration for a S≥1 CSI resource set (given by a higher layer parameter csi-RS-ResourceSetList). A CSI resource setting corresponds to CSI-RS- resourcesetlist. Here, S represents the number of configured CSI-RS resource sets. Here, a configuration for a S≥1 CSI resource set includes each CSI resource set including CSI-RS resources (configured with a NZP CSI-RS or CSI-IM) and a SS/PBCH block (SSB) resource used for L1-RSRP computation.

Each CSI resource setting is positioned at a DL BWP(bandwidth part) identified by a higher layer parameter bwp-id. In addition, all CSI resource settings linked to a CSI reporting setting have the same DL BWP.

A time domain behavior of a CSI-RS resource in a CSI resource setting included in a CSI-ResourceConfig IE may be indicated by a higher layer parameter resourceType and may be configured to be aperiodic, periodic or semi-persistent. For a periodic and semi-persistent CSI resource setting, the number (S) of configured CSI-RS resource sets is limited to '1'. For a periodic and semi-persistent CSI resource setting, configured periodicity and a slot offset are given by a numerology of an associated DL BWP as given by bwp-id.

When UE is configured with a plurality of CSI-ResourceConfigs including the same NZP CSI-RS resource ID, the same time domain behavior is configured for CSI-ResourceConfig.

When UE is configured with a plurality of CSI-ResourceConfigs including the same CSI-IM resource ID, the same time domain behavior is configured for CSI-ResourceConfig.

One or more CSI resource settings for channel measurement (CM) and interference measurement (IM) are configured through higher layer signaling as follows.

- CSI-IM resource for interference measurement
- NZP CSI-RS resource for interference measurement
- NZP CSI-RS resource for channel measurement

In other words, a CMR (channel measurement resource) may be a NZP CSI-RS for CSI acquisition and an IMR(Interference measurement resource) may be a NZP CSI-RS for CSI-IM and IM.

In this case, CSI-IM(or a ZP CSI-RS for IM) is mainly used for inter-cell interference measurement.

In addition, an NZP CSI-RS for IM is mainly used for intra-cell interference measurement from multi-users.

UE may assume that CSI-RS resource(s) for channel measurement and CSI-IM / NZP CSI-RS resource(s) for interference measurement configured for one CSI reporting are 'QCL-TypeD' per resource.

Resource Setting Configuration

As described, a resource setting may mean a resource set list.

For aperiodic CSI, each trigger state configured by using a higher layer parameter CSI-AperiodicTriggerState is associated with one or a plurality of CSI-ReportConfigs that each CSI-ReportConfig is linked to a periodic, semi-persistent or aperiodic resource setting.

One reporting setting may be connected to up to 3 resource settings.

- When one resource setting is configured, a resource setting (given by a higher layer parameter resourcesForChannelMeasurement) is about channel measurement for L1-RSRP computation.
- When two resource settings are configured, a first resource setting (given by a higher layer parameter resourcesForChannelMeasurement) is for channel measurement and a second resource setting (given by csi-IM-ResourcesForInterference or nzp-CSI-RS -ResourcesForInterference) is for interference measurement performed in CSI-IM or a NZP CSI-RS.
- When three resource settings are configured, a first resource setting (given by resourcesForChannelMeasurement) is for channel measurement, a second resource setting (given by csi-IM-ResourcesForInterference) is for CSI-IM based interference measurement and a third resource setting (given by nzp-CSI-RS-ResourcesForInterference) is for NZP CSI-RS based interference measurement.

For semi-persistent or periodic CSI, each CSI-ReportConfig is linked to a periodic or semi-persistent resource setting.

- When one resource setting (given by resourcesForChannelMeasurement) is configured, the resource setting is about channel measurement for L1-RSRP computation.
- When two resource settings are configured, a first resource setting (given by resourcesForChannelMeasurement) is for channel measurement and a second resourece setting (given by a higher layer parameter csi-IM-ResourcesForInterference) is used for interference measurement performed in CSI-IM.

CSI Computation

When interference measurement is performed in CSI-IM, each CSI-RS resource for channel measurement is associated with a CSI-IM resource per resource in an order of CSI-RS resources and CSI-IM resources in a corresponding resource set. The number of CSI-RS resources for channel measurement is the same as the number of CSI-IM resources.

In addition, when interference measurement is performed in an NZP CSI-RS, UE does not expect to be configured with one or more NZP CSI-RS resources in an associated resource set in a resource setting for channel measurement.

A terminal configured with a higher layer parameter nzp-CSI-RS-ResourcesForInterference does not expect that 18 or more NZP CSI-RS ports will be configured in a NZP CSI-RS resource set.

For CSI measurement, a terminal assumes the followings.

- Each NZP CSI-RS port configured for interference measurement corresponds to an interference transmission layer.
- All interference transmission layers of an NZP CSI-RS port for interference measurement consider EPRE (energy per resource element) ratio.
- A different interference signal in RE(s) of an NZP CSI-RS resource for channel measurement, an NZP CSI-RS resource for interference measurement or a CSI-IM resource for interference measurement

CSI Report

For a CSI report, a time and frequency resource which may be used by UE are controlled by a base station.

CSI(channel state information) may include at least one of a channel quality indicator(CQI), a precoding matrix indicator(PMI), a CSI-RS resource indicator (CRI), a SS/PBCH block resource indicator (SSBRI), a layer indicator (LI), a rank indicator (RI) or L1-RSRP.

For CQI, PMI, CRI, SSBRI, LI, RI, L1-RSRP, a terminal is configured by a higher layer with N≥1 CSI-ReportConfig reporting setting, M≥1 CSI-ResourceConfig resource setting and a list of one or two trigger states (provided by aperiodicTriggerStateList and semiPersistentOnPUSCH-TriggerStateList). Each trigger state in the aperiodicTriggerStateList includes a associated CSI-ReportConfigs list which indicates a channel and optional resource set IDs for interference. In semiPersistentOnPUSCH-TriggerStateList, one associated CSI-ReportConfig is included in each trigger state.

In addition, a time domain behavior of CSI reporting supports periodic, semi-persistent, aperiodic.

i) Periodic CSI reporting is performed in a short PUCCH, a long PUCCH. Periodicity and a slot offset of periodic CSI reporting may be configured by RRC and refers to a CSI-ReportConfig IE.

ii) SP(semi-periodic) CSI reporting is performed in a short PUCCH, a long PUCCH, or a PUSCH.

For SP CSI in a short/long PUCCH, periodicity and a slot offset are configured by RRC and a CSI report is activated/deactivated by separate MAC CE / DCI.

For SP CSI in a PUSCH, periodicity of SP CSI reporting is configured by RRC, but a slot offset is not configured by RRC and SP CSI reporting is activated/deactivated by DCI(format 0_1). For SP CSI reporting in a PUSCH, a separated RNTI(SP-CSI C-RNTI) is used.

An initial CSI report timing follows a PUSCH time domain allocation value indicated by DCI and a subsequent CSI report timing follows a periodicity configured by RRC.

DCI format 0_1 may include a CSI request field and activate/deactivate a specific configured SP-CSI trigger state. SP CSI reporting has activation/deactivation equal or similar to a mechanism having data transmission in a SPS PUSCH.

iii) Aperiodic CSI reporting is performed in a PUSCH and is triggered by DCI. In this case, information related to trigger of aperiodic CSI reporting may be delivered/indicated/configured through MAC-CE.

For AP CSI having an AP CSI-RS, AP CSI-RS timing is configured by RRC and timing for AP CSI reporting is dynamically controlled by DCI.

In NR, a method of dividing and reporting CSI in a plurality of reporting instances applied to a PUCCH based CSI report in LTE (e.g., transmitted in an order of RI, WB PMI/CQI, SB PMI/CQI) is not applied. Instead, in NR, there is a limit that a specific CSI report is not configured in a short/long PUCCH and a CSI omission rule is defined. In addition, regarding AP CSI reporting timing, a PUSCH symbol/slot location is dynamically indicated by DCI. In addition, candidate slot offsets are configured by RRC. For CSI reporting, a slot offset(Y) is configured per reporting setting. For UL-SCH, a slot offset K2 is separately configured.

2 CSI latency classes (low latency class, high latency class) are defined with regard to CSI computation complexity. Low latency CSI is WB CSI which includes up to 4 ports Type-I codebooks or up to 4 ports non-PMI feedback CSI. High latency CSI refers to CSI other than low latency CSI. For a normal terminal, (Z, Z') is defined in a unit of OFDM symbols. Here, Z represents the minimum CSI processing time until a CSI report is performed after receiving aperiodic CSI triggering DCI. In addition, Z' refers to the minimum CSI processing time until a CSI report is performed after receiving a CSI-RS for a channel/interference.

Additionally, a terminal reports the number of CSI which may be calculated at the same time.

Artificial Intelligence (AI) operation

With the technological advancement of artificial intelligence/machine learning (AI/ML), node(s) and UE(s) in a wireless communication network are becoming more intelligent/advanced. In particular, due to the intelligence of networks/base stations, it is expected that it will be possible to rapidly optimize and derive/apply various network/base station decision parameter values (e.g., transmission/reception power of each base station, transmission power of each UE, precoder/beam of base station/UE, time/frequency resource allocation for each UE, duplex method of each base station, etc.) according to various environmental parameters (e.g., distribution/location of base stations, distribution/location/material of buildings/furniture, etc., location/movement direction/speed of UEs, climate information, etc.). Following this trend, many standardization organizations (e.g., 3GPP, O-RAN) are considering introduction, and studies on this are also actively underway.

AI-related descriptions and operations described below may be supplemented to clarify technical characteristics of methods proposed in the present disclosure described later.

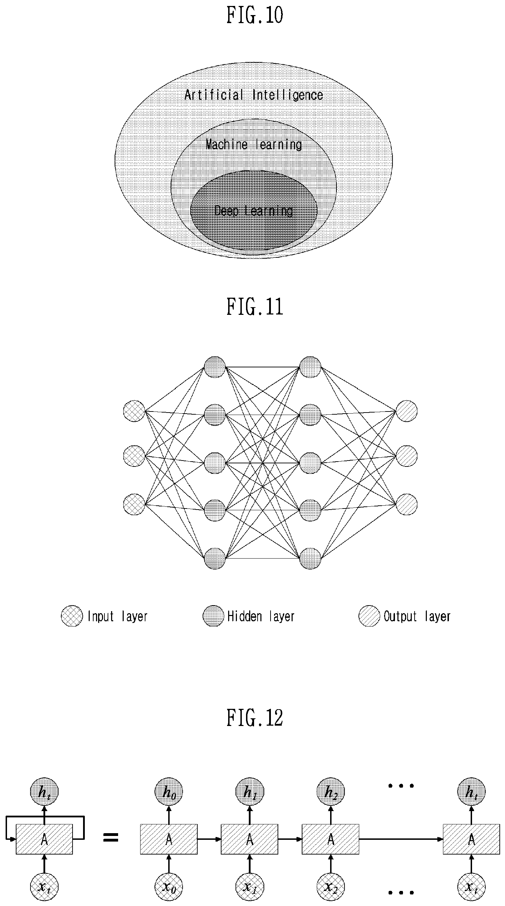

FIG. 10 illustrates a classification of artificial intelligence.

Referring to FIG. 10, artificial intelligence (AI) corresponds to all automation in which machines can replace work that should be done by humans.

Machine Learning (ML) refers to a technology in which machines learn patterns for decision-making from data on their own without explicitly programming rules.

Deep Learning is an artificial neural network-based model that allows a machine to perform feature extraction and decision from unstructured data at once. The algorithm relies on a multi-layer network of interconnected nodes for feature extraction and transformation, inspired by the biological nervous system, or Neural Network. Common deep learning network architectures include deep neural networks (DNNs), recurrent neural networks (RNNs), and convolutional neural networks (CNNs).

AI (or referred to as AI/ML) can be narrowly referred to as artificial intelligence based on deep learning, but is not limited to this in the present disclosure. That is, in the present disclosure, AI (or AI/ML) may collectively refer to automation technologies applied to intelligent machines (e.g., UE, RAN, network nodes, etc.) that can perform tasks like humans.

AI (or AI/ML) can be classified according to various criteria as follows.

1. Offline/online learning

a) Offline Learning
Offline learning follows a sequential procedure of database collection, learning, and prediction. In other words, collection and learning can be performed offline, and the completed program can be installed in the field and used for prediction work.
b) Online Learning

It refers to a method of gradually improving performance through incremental additional learning with additionally generated data by utilizing a fact that data which may be utilized for recent learning is continuously generated through the Internet. Learning is performed in real time in a (bundle) unit of specific data collected online, allowing the system to quickly adapt to changing data changing.
Only online learning may be used to build an AI system and learning may be performed only with data generated in real time, or after offline learning is performed by using a predetermined data set, additional learning may be performed by using real-time data generated additionally (online+offline learning).

2. Classification according to AI/ML Framework concept

a) Centralized Learning
In centralized learning, training data collected from a plurality of different nodes is reported to a centralized node, all data resources/storage/learning (e.g., supervised learning, unsupervised learning, reinforcement learning, etc.) are performed in one centralized node.
b) Federated Learning
Federated learning is a collective model built on data that exists across distributed data owners. Instead of collecting data into a model, AI/ML models are imported into a data source, allowing local nodes/individual devices to collect data and train their own copies of the model, eliminating the need to report the source data to a central node. In federated learning, the parameters/weights of an AI/ML model can be sent back to the centralized node to support general model training. Federated learning has advantages in terms of increased computation speed and information security. In other words, the process of uploading personal data to the central server is unnecessary, preventing leakage and misuse of personal information.
c) Distributed Learning
Distributed learning refers to the concept in which machine learning processes are scaled and distributed across a cluster of nodes. Training models are split and shared across multiple nodes operating simultaneously to speed up model training.

3. Classification according to learning method

a) Supervised Learning

Supervised learning is a machine learning task that aims to learn a mapping function from input to output, given a labeled data set. The input data is called training data and has known labels or results. An example of supervised learning is as follows.

- Regression: Linear Regression, Logistic Regression
- Instance-based Algorithms: k-Nearest Neighbor (KNN)
- Decision Tree Algorithms: Classification and Regression Tree (CART)
- Support Vector Machines (SVM)
- Bayesian Algorithms: Naive Bayes
- Ensemble Algorithms: Extreme Gradient Boosting, Bagging: Random Forest
  Supervised learning can be further grouped into regression and classification problems, where classification is predicting a label and regression is predicting a quantity.

b) Unsupervised Learning

Unsupervised learning is a machine learning task that aims to learn features that describe hidden structures in unlabeled data. The input data is not labeled and there are no known results. Some examples of unsupervised learning include K-means clustering, Principal Component Analysis (PCA), nonlinear Independent Component Analysis (ICA), and Long-Short-Term Memory (LSTM).

c) Reinforcement Learning (RL)

In reinforcement learning (RL), the agent aims to optimize long-term goals by interacting with the environment based on a trial and error process, and is goal-oriented learning based on interaction with the environment. An example of the RL algorithm is as follows.

- Q-learning
- Multi-armed bandit learning
- Deep Q Network
- State-Action-Reward-State-Action (SARSA)
- Temporal Difference Learning
- Actor-critic reinforcement learning
- Deep deterministic policy gradient (DDPG)
- Monte-Carlo tree search
  Additionally, reinforcement learning can be grouped into model-based reinforcement learning and model-free reinforcement learning as follows.
- Model-based reinforcement learning: refers to RL algorithm that uses a prediction model. Using a model of the various dynamic states of the environment and which states lead to rewards, the probabilities of transitions between states are obtained.
- Model-free reinforcement learning: refers to RL algorithm based on value or policy that achieves the maximum future reward. Multi-agent environments/states are computationally less complex and do not require an accurate representation of the environment.

Additionally, RL algorithm can also be classified into value-based RL vs. policy-based RL, policy-based RL vs. non-policy RL, etc.

Hereinafter, representative models of deep learning will be exemplified.

FIG. 11 illustrates a feed-forward neural network.

A feed-forward neural network (FFNN) is composed of an input layer, a hidden layer, and an output layer.

In FFNN, information is transmitted only from the input layer to the output layer, and if there is a hidden layer, it passes through it.

FIG. 12 illustrates a recurrent neural network.

A recurrent neural network (RNN) is a type of artificial neural network in which hidden nodes are connected to directed edges to form a directed cycle. This model is suitable for processing data that appears sequentially, such as voice and text.

In FIG. 12, A represents a neural network, xt represents an input value, and ht represents an output value. Here, ht may refer to a state value representing the current state based on time, and ht-1 may represent a previous state value.

One type of RNN is LSTM (Long Short-Term Memory), which has a structure that adds a cell-state to the hidden state of the RNN. LSTM can erase unnecessary memories by adding an input gate, forgetting gate, and output gate to the RNN cell (memory cell of the hidden layer). LSTM adds cell state compared to RNN.

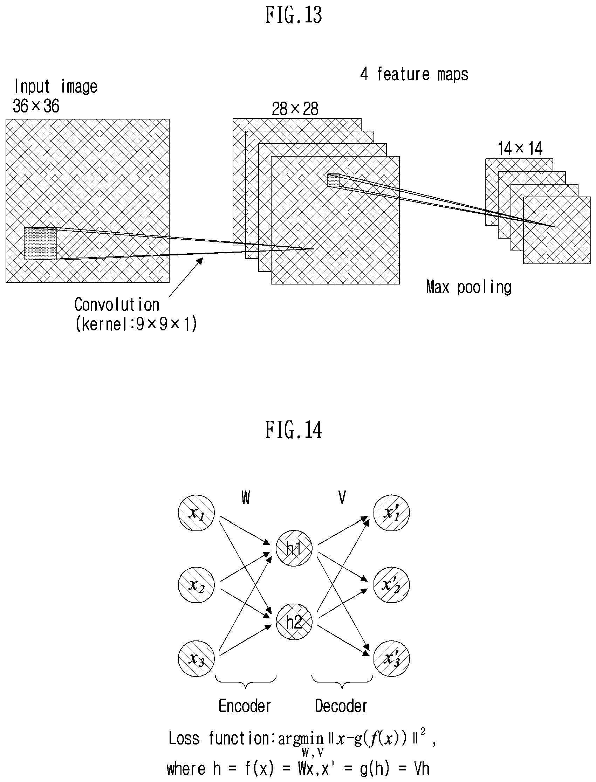

FIG. 13 illustrates a convolutional neural network.

Convolutional neural network (CNN) is used for two purposes: reducing model complexity and extracting good features by applying convolution operations commonly used in the image processing or image processing fields.

- Kernel or filter: refers to a unit/structure that applies weight to input of a specific range/unit. The kernel (or filter) can be changed through learning.
- Stride: refers to the movement range of moving the kernel within the input.
- Feature map: refers to the result of applying the kernel to input. Several feature maps can be extracted to ensure robustness to distortion, change, etc.
- Padding: refers to a value added to adjust the size of the feature map.
- Pooling: refers to an operation (e.g., max pooling, average pooling) to reduce the size of the feature map by downsampling the feature map.

FIG. 14 illustrates an auto encoder.

Auto encoder refers to a neural network that receives a feature vector x (x1, x2, x3, ...) as input and outputs the same or similar vector x' (x'1, x'2, x'3, ...)'.

Auto encoder has the same characteristics as the input node and output node. Since the auto encoder reconstructs the input, the output can be referred to as reconstruction. Additionally, auto encoder is a type of unsupervised learning.

The loss function of the auto encoder illustrated in FIG. 14 is calculated based on the difference between input and output, and based on this, the degree of input loss is identified and an optimization process is performed in the auto encoder to minimize the loss.

Hereinafter, for a more specific explanation of AI (or AI/ML), terms can be defined as follows.

- Data collection: Data collected from the network nodes, management entity or UE, as a basis for AI model training, data analytics and inference.
- AI Model: A data driven algorithm by applying AI techniques that generates a set of outputs consisting of predicted information and/or decision parameters, based on a set of inputs.

AI/ML Training: An online or offline process to train an AI model by learning features and patterns that best present data and get the trained AI/ML model for inference.

AI/ML Inference: A process of using a trained AI/ML model to make a prediction or guide the decision based on collected data and AI/ML model.

FIG. 15 illustrates a functional framework for an AI operation.

Referring to Figure 15, the data collection function (10) is a function that collects input data and provides processed input data to the model training function (20) and the model inference function (30).

Examples of input data may include measurements from UEs or different network entities, feedback from Actor, output from an AI model.

The Data Collection function (10) performs data preparation based on input data and provides input data processed through data preparation. Here, the Data Collection function (10) does not perform specific data preparation (e.g., data pre-processing and cleaning, formatting and transformation) for each AI algorithm, and data preparation common to AI algorithms can be performed.

After performing the data preparation process, the Model Training function (10) provides Training Data (11) to the Model Training function (20) and provides Inference Data (12) to the Model Inference function (30). Here, Training Data (11) is data required as input for the AI Model Training function (20). Inference Data (12) is data required as input for the AI Model Inference function (30).

The Data Collection function (10) may be performed by a single entity (e.g., UE, RAN node, network node, etc.), but may also be performed by a plurality of entities. In this case, Training Data (11) and Inference Data (12) can be provided from a plurality of entities to the Model Training function (20) and the Model Inference function (30), respectively.

Model Training function (20) is a function that performs the AI model training, validation, and testing which may generate model performance metrics as part of the model testing procedure. The Model Training function (20) is also responsible for data preparation (e.g., data pre-processing and cleaning, formatting, and transformation) based on Training Data (11) delivered by a Data Collection function (10), if required.

Here, Model Deployment/Update (13) is used to initially deploy a trained, validated, and tested AI model to the Model Inference function (30) or to deliver an updated model to the Model Inference function (30).

Model Inference function (30) is a function that provides AI model inference output (16) (e.g., predictions or decisions). Model Inference function (30) may provide Model Performance Feedback (14) to Model Training function (20) when applicable. The Model Inference function (30) is also responsible for data preparation (e.g., data pre-processing and cleaning, formatting, and transformation) based on Inference Data (12) delivered by a Data Collection function (10), if required.

Here, Output (16) refers to the inference output of the AI model produced by a Model Inference function (30), and details of inference output may be use case specific.

Model Performance Feedback (14) may be used for monitoring the performance of the AI model, when available, and this feedback may be omitted.

Actor function (40) is a function that receives the Output (16) from the Model Inference function (30) and triggers or performs corresponding actions. The Actor function (40) may trigger actions directed to other entities (e.g., one or more UEs, one or more RAN nodes, one or more network nodes, etc) or to itself.

Feedback (15) may be used to derive Training data (11), Inference data (12) or to monitor the performance of the AI Model and its impact to the network, etc.

Meanwhile, the definitions of training/validation/test in the data set used in AI/ML can be divided as follows.

- Training data: refers to a data set for learning a model.
- Validation data: This refers to a data set for verifying a model for which learning has already been completed. In other words, it usually refers to a data set used to prevent over-fitting of the training data set.

It also refers to a data set for selecting the best among various models learned during the learning process. Therefore, it can also be considered as a type of learning.

- Test data: refers to a data set for final evaluation. This data is unrelated to learning.

In the case of the data set, if the training set is generally divided, within the entire training set, training data and validation data can be divided into 8:2 or 7:3, and if testing is included, 6:2:2 (training: validation: test) can be used.

Depending on the capability of the AI/ML function between a base station and a UE, a cooperation level can be defined as follows, and modifications can be made by combining the following multiple levels or separating any one level.

Cat 0a) No collaboration framework: AI/ML algorithm is purely implementation-based and do not require any air interface changes.

Cat 0b) This level corresponds to a framework without cooperation but with a modified air interface tailored to efficient implementation-based AI/ML algorithm.

Cat 1) This involves inter-node support to improve the AI/ML algorithm of each node. This applies if a UE receives support from a gNB (for training, adaptation, etc.) and vice versa. At this level, model exchange between network nodes is not required.

Cat 2) Joint ML tasks between a UE and a gNB may be performed. This level requires AI/ML model command and an exchange between network nodes.

The functions previously illustrated in FIG. 15 may be implemented in a RAN node (e.g., base station, TRP, base station central unit (CU), etc.), a network node, a network operator's operation administration maintenance (OAM), or a UE.

Alternatively, the function illustrated in FIG. 15 may be implemented through cooperation of two or more entities among a RAN, a network node, an OAM of network operator, or a UE. For example, one entity may perform some of the functions of FIG. 15 and other entities may perform the remaining functions. As such, as some of the functions illustrated in FIG. 15 are performed by a single entity (e.g., UE, RAN node, network node, etc.), transmission/provision of data/information between each function may be omitted. For example, if the Model Training function (20) and the Model Inference function (30) are performed by the same entity, the delivery/provision of Model Deployment/Update (13) and Model Performance Feedback (14) can be omitted.

Alternatively, any one of the functions illustrated in FIG. 15 may be performed through collaboration between two or more entities among a RAN, a network node, an OAM of a network operator, or a UE. This can be referred to as a split AI operation.

FIG. 16 is a diagram illustrating split AI inference.

FIG. 16 illustrates a case in which, among split AI operations, the Model Inference function is performed in cooperation with an end device such as a UE and a network AI/ML endpoint.

In addition to the Model Inference function, the Model Training function, the Actor, and the Data Collection function are respectively split into multiple parts depending on the current task and environment, and can be performed by multiple entities collaborating.

For example, computation-intensive and energy-intensive parts may be performed at a network endpoint, while parts sensitive to personal information and delay-sensitive parts may be performed at an end device. In this case, an end device can execute a task/model from input data to a specific part/layer and then transmit intermediate data to a network endpoint. A network endpoint executes the remaining parts/layers and provides inference outputs to one or more devices that perform an action/task.

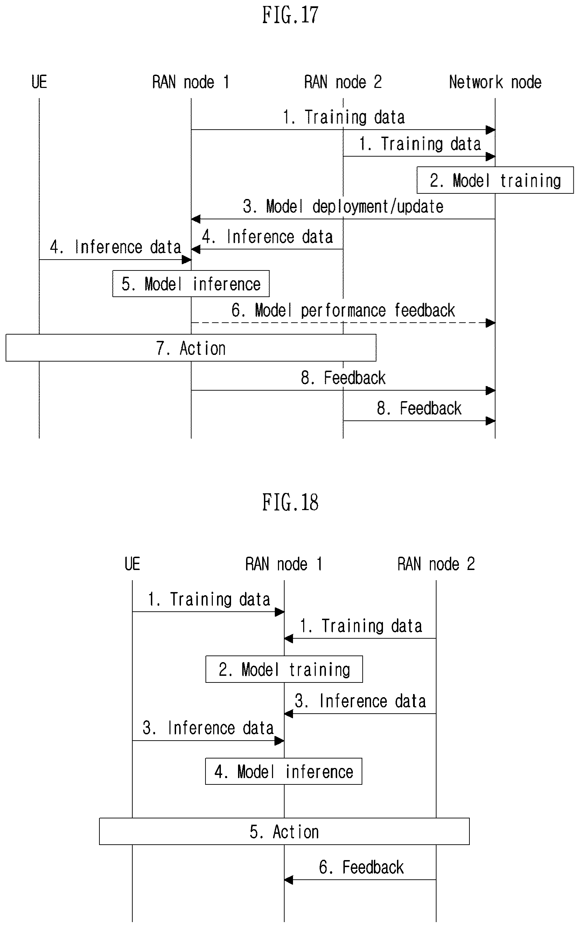

FIG. 17 illustrates an application of a functional framework in a wireless communication system.

FIG. 7 illustrates a case where the AI Model Training function is performed by a network node (e.g., core network node, network operator's OAM, etc.) and the AI Model Inference function is performed by a RAN node (e.g., base station, TRP, CU of base station, etc.).

Step 1: RAN Node 1 and RAN Node 2 transmit input data (i.e., Training data) for AI Model Training to the network node. Here, RAN Node 1 and RAN Node 2 may transmit the data collected from the UE (e.g., UE measurements related to RSRP, RSRQ, SINR of the serving cell and neighboring cells, UE location, speed, etc.) to the network node.

Step 2: The network node trains the AI Model using the received training data.

Step 3: The network node distributes/updates the AI Model to RAN Node 1 and/or RAN Node 2. RAN Node 1 (and/or RAN Node 2) may continue to perform model training based on the received AI Model.

For convenience of explanation, it is assumed that the AI Model has been distributed/updated only to RAN Node 1.

Step 4: RAN Node 1 receives input data (i.e., Inference data) for AI Model Inference from the UE and RAN Node 2.

Step 5: RAN Node 1 performs AI Model Inference using the received Inference data to generate output data (e.g., prediction or decision).

Step 6: If applicable, RAN Node 1 may send model performance feedback to the network node.

Step 7: RAN Node 1, RAN Node 2, and UE (or 'RAN Node 1 and UE', or 'RAN Node 1 and RAN Node 2') perform an action based on the output data. For example, in the case of load balancing operation, the UE may move from RAN node 1 to RAN node 2.

Step 8: RAN Node 1 and RAN Node 2 transmit feedback information to the network node.

FIG. 18 illustrates an application of a functional framework in a wireless communication system.

FIG. 18 illustrates a case where both the AI Model Training function and the AI Model Inference function are performed by a RAN node (e.g., base station, TRP, CU of the base station, etc.).

Step 1: The UE and RAN Node 2 transmit input data (i.e., Training data) for AI Model Training to RAN Node 1.

Step 2: RAN Node 1 trains the AI Model using the received training data.

Step 3: RAN Node 1 receives input data (i.e., Inference data) for AI Model Inference from the UE and RAN Node 2.

Step 4: RAN Node 1 performs AI Model Inference using the received Inference data to generate output data (e.g., prediction or decision).

Step 5: RAN Node 1, RAN Node 2, and the UE (or 'RAN Node 1 and UE', or 'RAN Node 1 and RAN Node 2') perform an action based on the output data. For example, in the case of load balancing operation, the UE may move from RAN node 1 to RAN node 2.

Step 6: RAN node 2 transmits feedback information to RAN node 1.

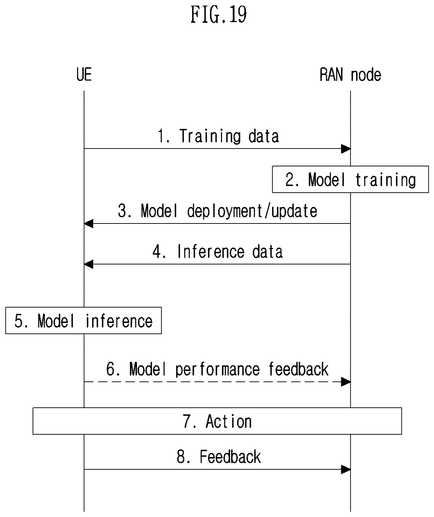

FIG. 19 illustrates an application of a functional framework in a wireless communication system.

FIG. 19 illustrates a case where the AI Model Training function is performed by a RAN node (e.g., base station, TRP, CU of the base station, etc.), and the AI Model Inference function is performed by the UE.

Step 1: The UE transmits input data (i.e., Training data) for AI Model Training to the RAN node. Here, the RAN node may collect data (e.g., measurements of the UE related to RSRP, RSRQ, SINR of the serving cell and neighboring cells, location of the UE, speed, etc.) from various UEs and/or from other RAN nodes.

Step 2: The RAN node trains the AI Model using the received training data.

Step 3: The RAN node distributes/updates the AI Model to the UE. The UE may continue to perform model training based on the received AI Model.

Step 4: The UE receives input data (i.e., Inference data) for AI Model Inference from the RAN node (and/or from other UEs).

Step 5: The UE performs AI Model Inference using the received Inference data to generate output data (e.g., prediction or decision).

Step 6: If applicable, the UE may transmit model performance feedback to the RAN node.

Step 7: The UE and the RAN node perform an action based on output data.

Step 8: The UE transmits feedback information to the RAN node.

AI/ML-based Configuration/Indication-based Channel State Information Reporting Method

In the present disclosure, it is described based on a 3GPP NR system, but it is not limited thereto, and it is obvious that an invented technology may be applied to other communication systems.

Due to the development of computational processing technology and AI (artificial intelligence)/ML (machine learning) technology, nodes and terminals in a wireless communication network are becoming more intelligent/advanced.

In particular, due to the intelligence of a network/a base station, a variety of network/base station determination parameter values may be quickly optimized and derived/applied according to a variety of environmental parameters (e.g., distribution/location of base stations, distribution/location/material of a building/a furniture, etc., location/movement direction/speed of terminals, climate information, etc.). For example, transmission/reception power of each base station, transmission power of each terminal, a precoder/a beam of a base station/a terminal, time/frequency resource allocation for each terminal, a duplex method of each base station, etc. may be quickly optimized. Under this environment, a network may quickly control/adjust interference to each terminal according to an environmental parameter which changes in real time.

In addition, in order to improve network throughput and control specific interference according to an environmental parameter of a network, a network (e.g., a base station) may receive more sophisticated (and/or concise) CSI measurements and results from a terminal or channel information between a base station and a terminal may be predicted through other RS (e.g., a SRS, etc.).

In the existing wireless communication system, a base station's channel estimation and precoder/beam determination method may be considered by being largely divided into an open-loop method and a closed-loop method. For an open-loop method, a base station does not acquire channel information from a terminal, and a base station supports a terminal in a terminal-transparent way by using a diversity method such as cyclic delay diversity (CDD) series or precoder cycling, etc.

On the other hand, for a closed-loop method, a terminal measures a channel based on a CSI-RS, etc. and reports a measured result to a base station, and typically, an explicit feedback reporting method and an implicit feedback reporting method are considered. Here, an explicit feedback reporting method means that a terminal gives feedback to a channel matrix itself and an implicit feedback reporting method is a method in which a characteristic of a channel is expressed/calculated by a channel quality indicator (CQI), a precoding matrix indicator (PMI), a rank indicator (RI), etc. and reported to a base station.

In a wireless communication system, Type I CSI feedback related to single user(SU)-MIMO and Type II CSI feedback related to multi user(MU)-MIMO are supported.

Here, Type I CSI feedback is based on a codebook based on DFT vector selection considering a spatial domain and a payload and/or an overhead related thereto may be small.

On the other hand, Type II CSI feedback is based on a codebook which may perform more sophisticated channel reporting by linearly combining DFT vectors on a spatial domain, and a payload and/or an overhead related thereto may be very large.

In a wireless communication system, in order to reduce a payload for the above-described Type II CSI feedback, a feedback method of considering not only a spatial domain but also a frequency domain was introduced. Specifically, when performing channel reporting per unit on a frequency domain (e.g., a subband), a correlation characteristic of channels in a frequency domain may be reflected by using a DFT vector in a frequency domain to report a channel, reducing a payload.

In the present disclosure, it is described based on a 3GPP NR system, but it is not limited thereto, and it is obvious that an invented technology may be applied to other communication systems.

The following are two examples of operation scenarios through network/base station AI.

An input for AI illustrated below may correspond to the Training Data and/or Inference Data, and an output for the AI may correspond to the output of Model Inference.

1) Network/base station AI operation scenario example #1

- Input for AI: Location/distribution of terminals, request traffic, location movement-related information (e.g., a terminal moving along a certain route like a train, a fixed terminal with the little probability of a location change, etc.), an uplink reception channel/RS (e.g., a PUCCH, a PUSCH, a SRS, a UL-DMRS, etc.) in a corresponding network/base station
- Output for AI: A location/distribution change of terminals, a request traffic pattern change and a prediction value for channel information

  A network/a base station may determine a short/mid-term time/frequency/space resource allocation method, an interference control/adjustment method, and/or a precoder/a beamformer, etc. for terminals based on the prediction value and capability information of each terminal (e.g., whether to have an interference cancellation reception function), etc.

2) Network/Base Station(gNB) and/or Terminal AI Operation Scenario Example #2

- Input for AI (a network/a base station): Location/distribution of terminals, request traffic, location movement-related information (e.g., a terminal moving along a certain route like a train, a fixed terminal with the little probability of a location change, etc.), feedback information received from a terminal in a corresponding network/base station

Output for AI (a network/a base station): A location/distribution position of terminals, a request traffic pattern change, and/or a prediction value for channel information (e.g., current and/or future channel information)
Input for AI (a terminal): Channel information estimated by a terminal in the past, channel information estimated from a RS transmitted by a base station (e.g., a SSB, a CSI-RS, a DM-RS, a PT-RS, a TRS, etc.), and transmission information of a base station transmitted by a base station (e.g., the number of antenna/panel ports, power information, QCL, etc.)
Output for AI (a terminal): (Simplified) current and/or future channel estimation information

A network/a base station may predict current and/or future channel information of a terminal based on the prediction value, capability information of each terminal (e.g., whether to have an interference cancellation reception function) and information reported from a terminal. In addition, a network/a base station may utilize predicted channel information to determine a short/mid-term time/frequency/space resource allocation method, an interference control/adjustment method and/or a precoder/a beamformer, etc.

In relation to channel state information reporting (CSI reporting) proposed in the present disclosure, a base station and a terminal may configure input and output based on an auto encoder. Here, an auto encoder is a neural network that receives feature vector x as input and outputs the same or similar vector x'. An auto encoder is meaningful when the number of hidden nodes (h) is smaller than the number of input layers and may be utilized for image compression, classification, regression, etc.

For example, a sparse auto encoder (SAE) has interest in output h of a hidden layer and has a regulation effect by forcing h to be sparse. A denoising auto encoder (DAE) and a contractive auto encoder (CAE) have a characteristic of keeping output of a hidden layer, i.e., an extracted feature vector, as a constant if possible although input changes slightly. A DAE is a method of adding noise and finding an original pattern without corresponding noise, but a CAE uses a method of making a differential value of an encoder function small.

In the present disclosure, when AI/ML as described above is introduced in a wireless communication system, methods for an effective operation of a terminal and/or a base station are described. Specifically, the present disclosure proposes methods for performing efficient channel state information reporting (CSI reporting) according to an AI/ML-based configuration/indication.

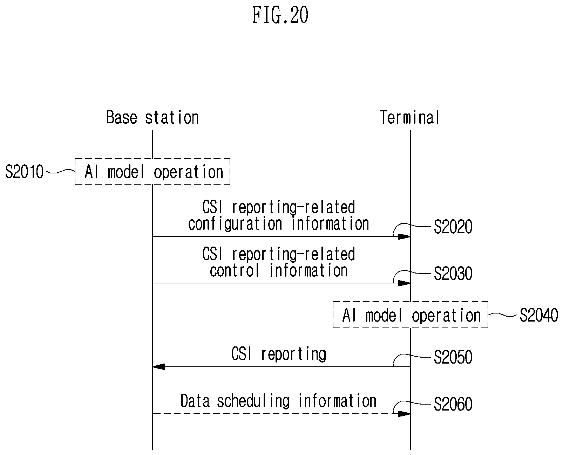

FIG. 20 is a diagram illustrating a signaling procedure between a base station and a terminal for a channel state information reporting method according to an embodiment of the present disclosure.

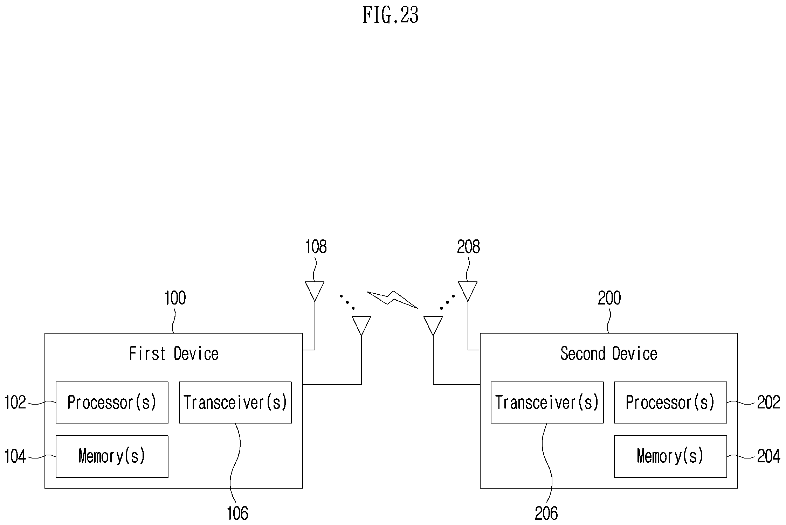

The example of FIG. 20 is just for convenience of a description, and it does not limit a scope of the present disclosure. In addition, some step(s) illustrated in FIG. 20 may be omitted according to a situation and/or a configuration, etc. In addition, the base station and the UE in FIG. 20 are only examples, and may be implemented as the device illustrated in FIG. 23 below. For example, the processor 102/202 of FIG. 23 may control transmission and reception of channels/signals/data/information, etc. using the transceiver 106/206, and may control to store transmitted or received channels/signals/data/information, etc. in the memory 104/204.

In addition, in the operation between the base station and the terminal of FIG. 20, the above-described contents may be referenced/used even if there is no separate mention.

A base station may be a general term for objects that transmit and receive data to and from a terminal. For example, the base station may be a concept including one or more transmission points (TPs), one or more transmission and reception points (TRPs), etc. Also, a TP and/or a TRP may include a panel of a base station, a transmission and reception unit, etc. In addition, "TRP" may be applied by being replaced with an expression such as a panel, an antenna array, a cell (e.g., macro cell / small cell / pico cell, etc.), a transmission point (TP), a base station (base station, gNB, etc.), etc.

Referring to FIG. 20, for convenience of description, signaling between one base station and a UE is considered, however the corresponding signaling scheme may be extended and applied to signaling between multiple TRPs and multiple UEs. In the following description, a base station may be interpreted as one TRP. In addition, a base station may include a plurality of TRPs, or may be one cell including a plurality of TRPs.

In S2010, a base station may perform an AI model operation before providing CSI reporting-related configuration information to a terminal (or before providing CSI reporting-related control information differently from a drawing). In addition, the operation of S2002 may be performed by a network node other than a base station, and a base station may receive the result.

For example, a base station or network node may generate an output using an AI Model from one or more inputs (i.e., Inference Data) by performing the Model Inference function among the AI functions previously illustrated in FIG. 15. Here, a base station or network node may perform multiple functions including the Model Inference function. In addition, a base station or network node may generate output from at least one input based on an auto encoder previously illustrated in FIG. 14.

For example, a base station or network node may receive location/distribution of terminals, request traffic, location movement-related information (e.g., a terminal moving along a certain route such as a train, a fixed terminal with the little probability of a location change, etc.), an uplink reception channel/RS (e.g., a PUCCH, a PUSCH, a SRS, an UL-DMRS, etc.), feedback information from a terminal, etc. as an input value, and based on it, may use an AI model to generate an output value (a short/mid-term time/frequency/space resource allocation method, an interference control/adjustment method, and/or a precoder/a beamformer, etc. for terminals).

Here, an output value output by a base station or network node or information derived (or processed) from an output value may correspond to configuration information and/or control information described later. In other words, a base station and network node may derive an output value appropriate for a situation through learning based on information on a changing environment and provide it to a terminal as configuration information and/or control information.

In particular, when a base station or network node performs a model inference function to derive the output value, at least one procedure illustrated in FIG. 17 or FIG. 18 may be performed together before S2010. Alternatively, when a terminal performs a model inference function to derive the output value, at least one procedure illustrated in FIG. 19 may be performed together before S2010.

In S2020, a base station may transmit configuration information related to CSI reporting to a terminal.

Corresponding configuration information may include configuration information on a CSI-related operation, a CSI-related resource configuration (e.g., a resource setting, a resource setting configuration, a CSI-RS resource configuration, etc.), CSI reporting (e.g., CSI reportQuantity, etc.), and/or CSI omission, etc. described above.

For example, corresponding configuration information may include configuration information on an uplink channel associated with CSI reporting (e.g., information on a PUSCH/PUCCH format, payload information, etc.), a reporting object related to CSI reporting (e.g., a PMI, a RI, a CQI, a CRI, etc.), information on a resource region which will perform CSI measurement (e.g., a CSI measurement band (/subband, etc.), reference signal information related to CSI calculation, etc.

As an example, the above-described configuration information may be transmitted and received through higher layer signaling (e.g., RRC signaling, etc.).

In S2030, a base station may transmit control information related to CSI reporting to a terminal. Here, control information related to CSI reporting may be control information based on configuration information in S2020.

Corresponding control information may include control/indication information for a CSI-related operation, a CSI-related resource configuration, CSI reporting, and/or CSI omission, etc. described above.

For example, control information may include payload indication information for at least one of a PUCCH or a PPUSCH carrying CSI reporting. Here, when corresponding CSI reporting is performed through a PUCCH, payload indication information may be configured in association with a format of a corresponding PUCCH.

In addition, control information may include information indicating a rank value at any one of a timing of CSI reporting or a timing of data scheduling, and in this case, corresponding CSI reporting may be performed based on the rank value.

In addition, when configuration information in S2020 includes information on multiple reporting objects related to CSI reporting (e.g., a PMI, a CQI, a RI, etc.), control information may include information indicating at least one reporting object of multiple reporting objects. In this case, corresponding CSI reporting may be determined/calculated based on the at least one reporting object. In addition, corresponding CSI reporting may include a differential value for the remaining reporting objects excluding the at least one reporting object.

In addition, when configuration information in S2020 includes information indicating at least one frequency domain resource for CSI reporting, control information may include information indicating at least one specific frequency domain resource among at least one frequency domain resource. Here, the at least one specific frequency domain resource may be associated with frequency domain resource allocation according to data scheduling following corresponding CSI reporting. In other words, corresponding CSI reporting may be configured to be performed based on information predicting resource allocation in subsequent data scheduling.

In addition, when configuration information in S2020 includes at least one parameter related to a reference resource for CSI reporting, control information may include an adjustment value for the at least one parameter.

As an example, the above-described control information may be transmitted and received through dynamic signaling (e.g., a MAC-CE, DCI, etc.).

In S2040, a terminal may perform an AI model operation before performing CSI reporting to a base station (or before receiving CSI reporting-related configuration information/control information differently from a drawing).

For example, a terminal may generate output by using an AI Model from at least one input (i.e., inference data) by performing a model inference function among AI functions previously illustrated in FIG. 15. Here, a terminal may perform multiple functions including a Model Inference function. In addition, a base station or network node may generate output from at least one input based on an auto encoder previously illustrated in FIG. 14.

For example, a terminal may configure channel information estimated by a terminal in the past, channel information estimated from a RS received from a base station (e.g., a SSB, a CSI-RS, a DM-RS, a PT-RS, a TRS, etc.) and transmission information received from a base station (e.g., the number of antenna/panel ports, power information, QCL, etc.) as an input value, and based on it, may use an AI Model to generate an output value (e.g., (simplified) current and/or future channel estimation information, etc.).

Here, an output value output by a terminal or information derived (or processed) from an output value may correspond to CSI reporting and/or information for CSI calculation described later. In other words, a base station and network node may derive an output value appropriate for a situation through learning based on information on a changing environment and report it to a base station in a form of CSI.

In particular, when a terminal performs a Model Inference function to derive the output value, at least one procedure illustrated in FIG. 17 or FIG. 18 may be performed together before S2040. Alternatively, when a base station performs a Model Inference function to derive the output value, at least one procedure illustrated in FIG. 19 may be performed together before S2040.

In S2050, a terminal may perform CSI reporting to a base station. In other words, a terminal may transmit CSI calculated based on the above-described configuration information and/or control information to a base station.

For example, CSI reporting in S2050 may be based on information on a channel state at a timing of the data scheduling based on a fact that the data scheduling by a base station will be performed after corresponding CSI reporting. In other words, CSI reporting in S2050 may be based on prediction information on a channel state at a timing of data scheduling by a base station S2060 after corresponding CSI reporting. In addition, corresponding CSI reporting may be further based on information on a transmission scheme (e.g., a precoding method, resource allocation information, etc.) at a timing of data scheduling S2060 by a base station after corresponding CSI reporting.

Here, information at a timing of data scheduling by a base station after corresponding CSI reporting (e.g., a channel state, a transmission method, etc.) may be an output value calculated based on at least one input by using an AI model by a base station and/or a terminal.

Hereinafter, various examples of configuring/controlling/indicating at least one parameter related to the above-described CSI reporting method between a base station and a terminal (e.g., configuration information and/or control information in FIG. 20) and performing CSI reporting accordingly are described.

Embodiment 1

This embodiment relates to a method of performing CSI reporting based on prediction information at a timing of data scheduling after corresponding CSI reporting in performing a CSI reporting procedure between a base station and a terminal.

For example, based on an AI Model in a base station/network node and/or a terminal, a base station may support CSI reporting by considering predication for channel information at a timing of data scheduling of a terminal and/or a transmission method in data scheduling (e.g., SU/MU-MIMO, a diversity method, a beamformer/precoder determination, etc.).

This embodiment may include some or all of the following examples.

(Embodiment 1-1)

This embodiment 1-1, based on information predicted through an AI Model, relates to a method in which a base station configures/indicates a parameter and/or a parameter set associated with a payload of CSI to be reported by a terminal.

For example, a base station may indicate an indicator, etc. indicating a payload of a PUCCH and/or a PUSCH carrying CSI reported by a terminal. In addition, a base station may determine a container size for a PUCCH and/or a PUSCH associated with a corresponding indicator and configure/indicate a determined container size to a terminal. Here, a container size may correspond to a size of a payload. Based on a corresponding indicator, a terminal may calculate optimal CSI suitable for a configured/indicated payload and report CSI to a base station through a PUCCH and/or a PUSCH.

In this case, a corresponding indicator, etc. may be configured/indicated through a format indicator in association with a specific PUCCH format and/or PUSCH format.

When the above-described indicator is used, there is an advantage that a base station may configure an UCI payload optimized for CSI reporting of a terminal (i.e., a CSI payload) and a terminal may perform CSI reporting without an additional operation such as CSI omission or CSI drop, etc.

As another example, through an AI Model in a base station or based on information reported by a terminal, a base station may explicitly or implicitly indicate to a terminal rank information at a timing of CSI reporting and/or a timing of data scheduling for a terminal. As an example, corresponding rank information may be dynamically indicated based on dynamic signaling (e.g., a MAC-CE, DCI, etc.).

Considering indicated rank information as described above, a terminal may omit calculation for a rank in CSI calculation, which has an effect of reducing CSI reporting complexity. As an example, regarding PUSCH-based CSI reporting, CSI reporting may be performed by using a 1 part encoding method, not a 2 parts encoding method. As a specific example, based on corresponding rank information, a terminal may report some or all of a CQI, a PMI, a LI and a CRI to a base station.

As another example, in the existing method, a CSI reporting object (e.g., CSI reporting-quantity) configured semi-statically through higher layer signaling (e.g., RRC signaling) may be operated more flexibly than when using an AI Model. As an example, a base station may configure/indicate a CSI reporting object in a dynamic manner in order to efficiently operate a CSI reporting object. Alternatively, a CSI reporting object configuration which may be changed (dynamically) unlike the existing method (e.g., dynamic reporting-config) may be newly defined and a base station may be configured to configure/indicate/change/update parameter(s) within an information element (IE) in a corresponding configuration through dynamic signaling (e.g., a MAC-CE, DCI, etc.).

As a specific example, a method of using a linkage between a previous CSI reporting object (hereinafter, referred to as quantity A) and a subsequent CSI reporting object (hereinafter, referred to as quantity B) may be considered. As an example, when a base station predicts through an AI Model, etc. that there is little change in a PMI, for the same CSI reporting configuration (e.g., the same CSI reportConfig ID), a corresponding base station may dynamically change/indicate to a terminal from {quantity A = RI/PMI/CQI} to {quantity B = RI/CQI or CQI only}. In this case, a terminal may assume a PMI of quantity A as it is and calculate/report RI/CQI or CQI only of quantity B.

In a specific example described above, when the PMI change amount is small, a terminal may report a differential value for a corresponding PMI in quantity B. In this case, quantity B reported by a terminal may be a RI/a differential PMI/a CQI.

As another example, a terminal may be configured to perform AI model-based prediction and report information on a time for which a specific CSI parameter will be maintained and/or whether to maintain it until a subsequent CSI reporting instance along with CSI.

When a corresponding CSI parameter is maintained in a subsequent CSI reporting instance, a terminal may perform CSI reporting by omitting a corresponding CSI parameter in a subsequent CSI reporting instance. As an example, a corresponding CSI parameter may be Part 1 CSI or some parameters of a PMI (included in Part 2 CSI) (e.g., W1 only or WB CSI (PMI), etc.).

In this embodiment 1-1, a payload-designated(related) parameter may be applied by being limited to specific CSI (e.g., a PMI). In addition, CSI included in a payload may include AI/ML-related parameter value(s) and/or some values of AI/ML-related coefficient(s) which should be updated for an AL Model operation of a terminal and/or a base station other than implicit CSI such as the existing CQI, PMI, RI, LI, CRI, etc.

(Embodiment 1-2)

This embodiment 1-2, based on information predicted through an AI Model, relates to a method in which a base station configures/indicates a frequency resource region (e.g., a band, a subband, etc.) which should be measured and/or reported by a terminal.

Regarding CSI reporting in the existing wireless communication system, a subband (or a band) which should be reported by a terminal is configured semi-statically by a base station per reporting setting through higher layer signaling (e.g., RRC signaling). In this case, a subband which should be reported by a terminal may be different from a subband for which a terminal will receive data scheduling from a base station. In this case, a subband for data scheduling of a terminal may vary depending on a transmission method that a base station supports a terminal (e.g., a precoder method, SU/MU, etc.).

As in a method proposed in this embodiment 1-2, when a base station may predict a transmission method at a timing of data scheduling for a terminal, data resource allocation information at a corresponding timing may be also known, and in this case, a terminal may not need to report redundant CSI. Accordingly, a base station may dynamically configure/indicate to a terminal information on a frequency resource region which should be reported by a terminal (i.e., a reporting subband or a reporting band), which may reduce a CSI reporting payload.

In addition to the above-described configuration/indication, a PDSCH that data is actually scheduled may be also the same as a frequency domain configured by a reporting subband (or a reporting band) configured by a base station or scheduling for a PDSCH may be configured within a corresponding frequency domain. In addition, a terminal may be configured not to expect that a PDSCH is scheduled outside of a corresponding frequency domain.

Regarding the above-described method of dynamically configuring a frequency resource region which should be reported by a terminal, a method may be considered in which a terminal reports information in a form of a bitmap again through a MAC-CE or DCI by the number of reported-on bits based on a bitmap of a reporting subband (or a reporting band) configured by higher layer signaling (e.g., RRC signaling). As an example, a reported-on bit may refer to a bit that a subband in reportFreqConfiguration of RRC signaling is configured as 1. Alternatively, a method may be considered in which specific bitmap pattern(s) are defined and a base station indicates a corresponding pattern to a terminal. Alternatively, a method may be also considered in which a base station indicates only the number of best/preferred subbands and a terminal measures and reports CSI corresponding to the number of corresponding subbands.

In addition, in this embodiment 1-2, an operation may be performed with a configuration for dividing configuration information (e.g., a CSI-RS resource set, CSI reportConfig, a report set, etc.) related to a method of performing reporting for all subbands as in the existing method (i.e., a full CSI reporting method) and a proposed method of dynamically performing reporting by configuring/indicating specific subband(s).

(Embodiment 1-3)

This embodiment 1-3 relates to a method in which a base station configures/indicates to a terminal information on a CSI reporting, estimation and/or prediction timing of a terminal.

For example, a base station may configure/indicate to a terminal information on whether CSI information which should be reported by a terminal is based on a data scheduling timing or whether it is based on a CSI reporting timing determined by CSI-RS triggering.

Alternatively, a base station may configure/designate a specific time window and a base station may configure/indicate a terminal to report information on CSI determined/calculated by a terminal through filtering (e.g., average) within a configured/designated time window. In this case, a start timing for a corresponding time window (i.e., a measurement start point) may be configured/indicated and a certain time duration or an end timing may be configured/indicated.

(Embodiment 1-4)

This embodiment 1-4 relates to a method of dynamically configuring/indicating parameter(s) related to a reference resource for accurate CSI calculation/prediction based on an AI Model.

As an example, a reference resource is defined for CSI calculation of a terminal in a wireless communication system, and information which should be assumed in CSI calculation in a corresponding reference resource may be the same as in Table 6 below.

[Table 6]

| |
|---|
| - The first 2 OFDM symbols are occupied by control signaling.<br>- The number of PDSCH and DM-RS symbols is equal to 12.<br>- The same bandwidth part subcarrier spacing configured as for the PDSCH reception<br>- The bandwidth as configured for the corresponding CQI report.<br>- The reference resource uses the CP length and subcarrier spacing configured for PDSCH reception<br>- No resource elements used by primary or secondary synchronization signals or PBCH. |
| - Redundancy Version 0.<br>- The ratio of PDSCH EPRE to CSI-RS EPRE<br>- Assume no REs allocated for NZP CSI-RS and ZP CSI-RS.<br>- Assume the same number of front-loaded DM-RS symbols as the maximum front-loaded symbols configured by the higher layer parameter maxLength in DMRS-DownlinkConfig.<br>- Assume the same number of additional DM-RS symbols as the additional symbols configured by the higher layer parameter dmrs-AdditionalPosition.<br>- Assume the PDSCH symbols are not containing DM-RS.<br>- Assume PRB bundlinq size of 2 PRBs |

For accurate CSI calculation/prediction which will be applied to an AI Model in a terminal and/or a base station, a method of (dynamically) configuring/reconfiguring values which should be assumed for all or part of parameters illustrated in Table 6 may be considered.

For example, a base station may configure/reconfigure the number of symbols of a control channel and/or the number of DM-RSs, etc. which should be assumed at a data scheduling timing of a terminal through a MAC-CE or DCI and a terminal may calculate and report CSI by assuming a configured/reconfigured value.

Whether to configure/reconfigure the above-described parameter may be configured based on a terminal's capability information or may be configured in connection with a specific parameter. For example, a specific parameter may include a BWP ID (identity), a CSI-RS ID, a CSI report ID, a panel ID, etc.

Embodiment 2

This embodiment relates to a signaling method for efficiently performing CSI omission for corresponding CSI in performing a CSI reporting procedure between a base station and a terminal.
This embodiment may include all or part of the following examples.

(Embodiment 2-1)

This embodiment 2-1 relates to a method of indicating a CSI omission rate which should be applied by a base station to CSI omission in a terminal.
For example, a base station may indicate information on a CSI omission rate which should be applied by a terminal to CSI omission and a corresponding terminal may calculate and apply CSI to satisfy an indicated CSI omission rate and report CSI information to a base station.
The above-described CSI omission rate may be defined as {the number of actual feedback bits / the number of bits required for full CSI reporting by configured information}. As an example, a corresponding CSI omission rate may be configured/defined to be applied only to a PMI. In addition, the above-described CSI omission rate may be used by being replaced with information on how much CSI should be compressed (i.e., a CSI compression rate).
The above-described CSI omission/compression rate may be an input-to-output ratio of an encoder or may be configured/defined as a length of an output vector when using an auto encoder related to an AI Model. In this case, it may be assumed that an encoder is on a terminal side.
The above-described CSI omission/compression rate may be configured/indicated per rank or rank group. It is because a payload required is different per rank (or rank group) reported by a terminal.
The above-described CSI omission/compression rate may be configured/indicated/applied per layer or layer group. In order to facilitate the above-described operation, a terminal may configure differently and report a priority per layer or layer group or a base station may configure a priority to a terminal per layer or layer group. As an example, a layer with a high priority may be configured to have a low CSI omission/compression rate. Based on a corresponding priority, a terminal may report more accurate channel information to a base station.

(Embodiment 2-2)

This embodiment 2-2 relates to a method in which a terminal includes a CSI omission rate applied to CSI omission in CSI reporting and reports it.
For example, a terminal may be configured to calculate/omit/compress CSI to suit a feedback resource (e.g., a PUSCH, a PUCCH) configured by a base station and report information on a corresponding CSI omission/compression rate with CSI to a base station. As an example, corresponding information may be reported by being included in Part 1 CSI, which is to remove ambiguity about a payload of Part 2 CSI.
In the above-described example, granularity of a CSI omission/compression rate may be configured by a base station or may be promised or defined in advance or may be information additionally reported by a terminal.
The above-described CSI omission/compression rate may be an input-to-output ratio of an encoder or may be configured/defined as a length of an output vector when using an auto encoder related to an AI Model. In this case, it may be assumed that an encoder is on a terminal side.
In addition, in relation to this embodiment 2-2, a terminal may perform calculation and/or compression to suit a feedback resource (e.g., a PUSCH, a PUCCH, etc.) configured by a base station to perform optimal codebook parameterization. As an example, corresponding calculation and/or compression may be based on an AI Model described above.
As a specific example, a codebook parameter of Type II Codebook may be configured/determined by higher layer signaling (e.g., RRC signaling) or may be information fixed in the standard. As an example, a codebook parameter may include the number of SD base information, FD base information and/or time domain (TD) base information (e.g., 1D/2D DFT vectors), an oversampling factor, a type of base information, granularity of a combining coefficient of amplitude/phase, the maximum number of combining coefficients, etc. A corresponding codebook parameter may be configured as layer common. But, in some cases, all or part of a corresponding codebook parameter may be configured in a layer(or rank)-specific way.
A terminal may be configured to derive an optimal size (e.g., a bitwidth) and/or a parameter value for the above-described codebook parameter based on an AI Model (of a terminal) and report/give feedback on derived information to a base station. In this case, in order to remove ambiguity of a payload, in CSI reporting of a terminal, information on information on a size of all or part of codebook parameters described above (e.g., a bitwidth, the number of coefficients, a granularity size, etc.) may be reported by being included in Part 1 CSI.

As another specific example, a terminal may be configured to perform CSI reporting in three steps of 1) reporting a RI and/or a CQI (first), 2) reporting parameterization information for a PMI and 3) reporting a PMI, a LI and/or a CQI (second). As another specific example, a terminal may be configured to perform CSI reporting in three steps of 1) reporting a RI and/or a CQI (first), 2) reporting parameterization information for a LI and/or a CQI (second) and/or a PMI and 3) reporting a PMI.

Here, parameterization information for a PMI in a second step may include information on information on a size of all or part of codebook parameters in the example (e.g., a bitwidth, the number of coefficients, a granularity size, etc.). Parameterization information for a PMI may be information commonly applied to a layer or may be information applied per layer (or layer group) or rank.

The above-described examples were described based on Type II CSI reporting, but they may be extended and applied to Type I CSI reporting. In addition, indication information (e.g., an indicator) indicating whether CSI calculated by a terminal is based on an AI Model may be also reported by being included in CSI.

In addition, the above-described examples may be applied to a situation where a terminal (only) is equipped with an AI Model-based processing capability. Alternatively, they may be also applied to a situation where a corresponding terminal is configured to perform only inference because AI Model-related training is performed in a base station/a network and a base station/a network performs model transfer for a terminal.

The above-described embodiment 1 and embodiment 2 may be applied and/or implemented alone or in combination between two embodiments.

As described above, when a base station/a network to which an AI Model-based technology is applied or a base station/a network with advanced performance (through other means) is implemented, dynamic optimization for interference/traffic, etc. may be possible through real-time cooperation and/or integrated control between base stations. The present disclosure proposes a resource control and CSI-related signaling method suitable for such an environment.

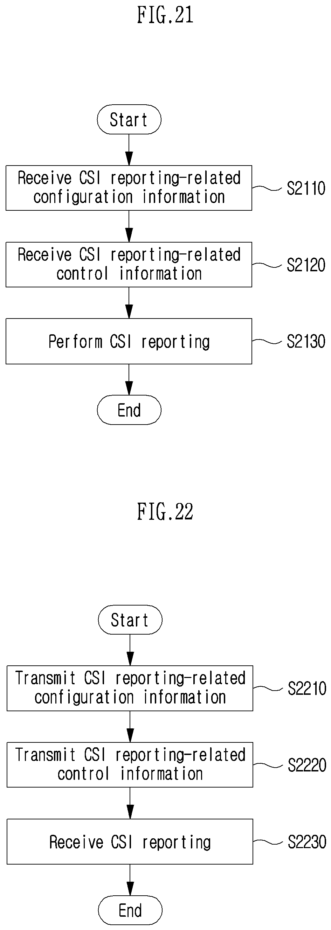

FIG. 21 is a diagram illustrating an operation of a terminal for a channel state information reporting method according to an embodiment of the present disclosure.

FIG. 21 illustrates an operation of a terminal based on the method proposed above (e.g., any one of Embodiment 1, Embodiment 2, and detailed embodiments thereof, or a combination of one or more (detailed) embodiments). The example of FIG. 21 is for convenience of description and does not limit the scope of the present disclosure. Some step(s) illustrated in FIG. 21 may be omitted depending on circumstances and/or settings. In addition, the terminal in FIG. 21 is only examples, and may be implemented as the device illustrated in FIG. 23 below. For example, the processor 102/202 of FIG. 23 may control transmission and reception of channels/signals/data/information, etc. using the transceiver 106/206, and may control to store transmitted or received channels/signals/data/information, etc. in the memory 104/204.

Additionally, the operations of FIG. 21 may be processed by one or more processors 102 and 202 of FIG. 23, and the operation of FIG. 21 may be stored in memory (e.g., one or more memories 104, 204 of FIG. 23) in the form of instructions/programs (e.g., instructions, executable code) for driving at least one processor (e.g., 102, 202) of FIG. 23.

In reference to FIG. 21, a terminal receives configuration information related to CSI reporting from a base station in S2110.

Here, configuration information may correspond to configuration information described in the above-described embodiment 1 and/or embodiment 2 (e.g., configuration information by higher layer signaling). In other words, the configuration information may include parameter(s) for applying the proposal (e.g., embodiment 1 and/or embodiment 2).

Corresponding configuration information may correspond to CSI reporting-related configuration information described in FIG. 20 and a detailed description for overlapped contents is omitted.

In S2120, a terminal receives control information related to CSI reporting from a base station.

Here, control information may correspond to configuration information described in the above-described embodiment 1 and/or embodiment 2 (e.g., control/indication information by dynamic signaling). In other words, the control information may include parameter(s) for applying the proposal (e.g., embodiment 1 and/or embodiment 2).

Corresponding control information may correspond to CSI reporting-related control information described in FIG. 20 and a detailed description for overlapped contents is omitted.

In S2130, a terminal performs CSI reporting to a base station based on the above-described configuration information and control information.

Here, CSI reporting may refer to reporting calculated/measured/predicted CSI to a base station based on parameter(s) for applying the proposal (e.g., embodiment 1 and/or embodiment 2).

Corresponding CSI reporting may correspond to CSI reporting described in FIG. 20 and a detailed description for overlapped contents is omitted.

FIG. 22 is a diagram illustrating an operation of a base station for a channel state information reporting method according to an embodiment of the present disclosure.

FIG. 22 illustrates an operation of a base station based on the method proposed above (e.g., any one of Embodiment 1, Embodiment 2, and detailed embodiments thereof, or a combination of one or more (detailed) embodiments). The example of FIG. 22 is for convenience of description and does not limit the scope of the present disclosure.

Some step(s) illustrated in FIG. 22 may be omitted depending on circumstances and/or settings. In addition, the base station in FIG. 22 is only examples, and may be implemented as the device illustrated in FIG. 23 below. For example, the processor 102/202 of FIG. 23 may control transmission and reception of channels/signals/data/information, etc. using the transceiver 106/206, and may control to store transmitted or received channels/signals/data/information, etc. in the memory 104/204.

Additionally, the operations of FIG. 22 may be processed by one or more processors 102 and 202 of FIG. 23, and the operation of FIG. 21 may be stored in memory (e.g., one or more memories 104, 204 of FIG. 23) in the form of instructions/programs (e.g., instructions, executable code) for driving at least one processor (e.g., 102, 202) of FIG. 23.

In reference to FIG. 22, a base station transmits configuration information related to CSI reporting to a terminal in S2210.

Here, configuration information may correspond to configuration information described in the above-described embodiment 1 and/or embodiment 2 (e.g., configuration information by higher layer signaling). In other words, the configuration information may include parameter(s) for applying the proposal (e.g., embodiment 1 and/or embodiment 2).

Corresponding configuration information may correspond to CSI reporting-related configuration information described in FIG. 20 and a detailed description for overlapped contents is omitted.

In S2220, a base station transmits control information related to CSI reporting to a terminal.

Here, control information may correspond to configuration information described in the above-described embodiment 1 and/or embodiment 2 (e.g., control/indication information by dynamic signaling). In other words, the control information may include parameter(s) for applying the proposal (e.g., embodiment 1 and/or embodiment 2).

Corresponding control information may correspond to CSI reporting-related control information described in FIG. 20 and a detailed description for overlapped contents is omitted.

In S2230, a base station receives CSI reporting based on the above-described configuration information and control information from a terminal.

Here, CSI reporting may refer to CSI reporting calculated/measured/predicted based on parameter(s) for applying the proposal (e.g., embodiment 1 and/or embodiment 2).

Corresponding CSI reporting may correspond to CSI reporting described in FIG. 20 and a detailed description for overlapped contents is omitted.

General Device to which the Present Disclosure may be applied

FIG. 23 illustrates a block diagram of a wireless communication device according to an embodiment of the present disclosure.

In reference to FIG. 23, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device XXX, YYY of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device XXX, YYY of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

**Claims**

**1.** A method for performing channel state information (CSI) reporting by a terminal in a wireless communication system, the method comprising:

receiving configuration information related to the CSI reporting from a base station;

receiving control information based on the configuration information from the base station; and
performing the CSI reporting based on the configuration information and the control information,
wherein, based on that data scheduling by the base station is to be performed after the CSI reporting, the CSI
reporting is based on information on a channel state at a timing of the data scheduling.

2. The method of claim 1, wherein:
at least one of the configuration information or the control information includes payload indication information on at
least one of a physical uplink control channel (PUCCH) or a physical uplink shared channel (PUSCH) carrying the
CSI reporting.

3. The method of claim 2, wherein:
based on the payload indication information being for the PUCCH, the payload indication information is configured
in association with a format of the PUCCH.

4. The method of claim 2, wherein:
based on the payload indication information, a codebook parameter for the CSI reporting is determined by using an
artificial intelligence model.

5. The method of claim 1, wherein:

the control information includes information indicating a rank value at any one of a timing of the CSI reporting
or a timing of the data scheduling, and
the CSI reporting is performed based on the rank value.

6. The method of claim 1, wherein:

the configuration information includes information on multiple reporting objects related to the CSI reporting,
the control information includes information indicating at least one reporting object among the multiple reporting
objects, and
the CSI reporting is based on the at least one reporting object.

7. The method of claim 6, wherein:
the CSI reporting is further based on a differential value for remaining reporting objects excluding the at least one
reporting object among the multiple reporting objects.

8. The method of claim 1, wherein:

the configuration information includes information indicating at least one frequency domain resource for the CSI
reporting,
the control information includes information indicating at least one specific frequency domain resource among
the at least one frequency domain resource, and
the at least one specific frequency domain resource is associated with frequency domain resource allocation
according to the data scheduling.

9. The method of claim 1, wherein:

the configuration information includes at least one parameter related to a reference resource for the CSI reporting,
and
the control information includes an adjustment value for the at least one parameter.

10. The method of claim 1, wherein:

the CSI reporting is further based on information on a transmission scheme at the timing of the data scheduling,
and
the information on the transmission scheme includes at least one of a precoding scheme or resource allocation
information.

11. The method of claim 1, wherein:

the configuration information is received through higher layer signaling,
the control information is received through dynamic signaling.

12. The method of claim 1, wherein:
at least one of the configuration information, the control information or the information on the channel state at the timing of the data scheduling is an output value calculated based on at least one input by using an artificial Intelligence model by the base station or the terminal.

13. A terminal for performing channel state information (CSI) reporting in a wireless communication system, the terminal comprising:

at least one transceiver; and
at least one processor coupled with the at least one transceiver,
wherein the at least one processor is configured to:

receive configuration information related to the CSI reporting from a base station;
receive control information based on the configuration information from the base station; and
perform the CSI reporting based on the configuration information and the control information,
wherein, based on that data scheduling by the base station is to be performed after the CSI reporting, the CSI reporting is based on information on a channel state at a timing of the data scheduling.

14. A method for receiving channel state information (CSI) reporting by a base station in a wireless communication system, the method comprising:

transmitting configuration information related to the CSI reporting to a terminal;
transmitting control information based on the configuration information to the terminal; and
receiving the CSI reporting based on the configuration information and the control information from the terminal,
wherein, based on that data scheduling by the base station is to be performed after the CSI reporting, the CSI reporting is based on information on a channel state at a timing of the data scheduling.

15. A base station for receiving channel state information (CSI) reporting in a wireless communication system, the base station comprising:

at least one transceiver; and
at least one processor coupled with the at least one transceiver,
wherein the at least one processor is configured to:

transmit configuration information related to the CSI reporting to a terminal;
transmit control information based on the configuration information to the terminal; and
receive the CSI reporting based on the configuration information and the control information from the terminal,
wherein, based on that data scheduling by the base station is to be performed after the CSI reporting, the CSI reporting is based on information on a channel state at a timing of the data scheduling.

16. A processing apparatus configured to control a terminal to perform channel state information (CSI) reporting in a wireless communication system, the processing apparatus comprising:

at least one processor; and
at least one computer memory operably connected to the at least one processor and storing instructions that, based on being executed by the at least one processor, perform operations,
wherein the operations include:

receiving configuration information related to the CSI reporting from a base station;
receiving control information based on the configuration information from the base station; and
performing the CSI reporting based on the configuration information and the control information,
wherein, based on that data scheduling by the base station is to be performed after the CSI reporting, the CSI reporting is based on information on a channel state at a timing of the data scheduling.

**17.** At least one non-transitory computer-readable medium storing at least one instruction, wherein:
the at least one instruction executable by at least one processor controls a device performing channel state information (CSI) reporting in a wireless communication system to:

receive configuration information related to the CSI reporting from a base station;
receive control information based on the configuration information from the base station; and
perform the CSI reporting based on the configuration information and the control information,
wherein, based on that data scheduling by the base station is to be performed after the CSI reporting, the CSI reporting is based on information on a channel state at a timing of the data scheduling.

FIG.1

# FIG.2

Radio Frame 10ms

Fixed Size

Subframe 1ms

| 0 | 1 | 2 | 3 | 4 | 5 | 6 | 7 | 8 | 9 |

Subframe ={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbols

FIG.3

One Subframe

$14 \cdot 2^{\mu}$ OFDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
- In a resource grid, $(k, \bar{l})$
- In a resource block, $(k, l)$

$k = 0$

$l = 0$

$l = 14 \cdot 2^{\mu} - 1$

FIG.4

# FIG.5

Resource grid

A carrier
(up to 3300 subcarriers,i,e.,275 RBs)

A BWP

1 RB=12 subcarrier

1 RE

1 subcarrier

1 Symbol

k=0

l=0 ·····

FIG.6

**INITIAL CELL SEARCH** — PSS/SSS& [DLRS]& PBCH — S601

**SYSTEM INFORMATION RECEPTION** — PDCCH/PDSCH (BCCH) — S602

**RANDOM ACCESS PROCEDURE** — PDCCH/PDSCH (S603) · PRACH (S604) · PDCCH/PDSCH (S605) · PUSCH (S606)

**GENERAL DL/UL Tx/Rx** — PDCCH/PDSCH (S607) · PUSCH/PUCCH (S608)

· DL/UL ACK/NACK
· UE CQI/PMI RI REPORT
  USING PUSCH AND PUCCH

EP 4 373 017 A1

# FIG.7

Layer group #1
for CW #1

Layer group #2
for CW #1

TRP 1

TRP 2

UE1

(a)

Layer group #1
for CW #1

Layer group #2
for CW #2

TRP 1

TRP 2

UE1

(b)

FIG.8

UE                                    Base station

┌─────────────────────┐
│ Downlink scheduling │──── S1401
└─────────────────────┘

←──── DCI for downlink scheduling (PDCCH) ──── S1402

←──── Downlink data (PDSCH) ──── S1403

FIG.9

UE                                    Base station

┌─────────────────────┐
│ Uplink scheduling │──── S1501
└─────────────────────┘

←──── DCI for uplink scheduling (PDCCH) ──── S1502

──── Uplink data (PUSCH) ────→ S1503

FIG.10

FIG.11

Input layer  Hidden layer  Output layer

FIG.12

FIG.13

Input image
36×36

4 feature maps

28×28

14×14

Convolution
(kernel:9×9×1)

Max pooling

FIG.14

W                V

$x_1$    $x'_1$

h1

$x_2$    $x'_2$

h2

$x_3$    $x'_3$

Encoder      Decoder

Loss function: $\underset{W,V}{\arg\min} \| x - g(f(x)) \|^2$ ,
where h = f(x) = Wx, x' = g(h) = Vh

FIG.15

FIG.16

FIG.17

UE          RAN node 1          RAN node 2          Network node

1. Training data

1. Training data

2. Model training

3. Model deployment/update

4. Inference data

4. Inference data

5. Model inference

6. Model performance feedback

7. Action

8. Feedback

8. Feedback

FIG.18

UE          RAN node 1          RAN node 2

1. Training data

1. Training data

2. Model training

3. Inference data

3. Inference data

4. Model inference

5. Action

6. Feedback

FIG.19

FIG.20

## FIG.21

Start

Receive CSI reporting-related
configuration information — S2110

Receive CSI reporting-related
control information — S2120

Perform CSI reporting — S2130

End

## FIG.22

Start

Transmit CSI reporting-related
configuration information — S2210

Transmit CSI reporting-related
control information — S2220

Receive CSI reporting — S2230

End

FIG.23

## INTERNATIONAL SEARCH REPORT

| International application No. |
| --- |
| **PCT/KR2022/009647** |

**A.    CLASSIFICATION OF SUBJECT MATTER**

**H04L 1/00**(2006.01)i; **H04L 5/00**(2006.01)i; **H04B 7/06**(2006.01)i; **H04B 17/309**(2014.01)i; **H04W 24/10**(2009.01)i; **G06N 20/00**(2019.01)i

According to International Patent Classification (IPC) or to both national classification and IPC

**B.    FIELDS SEARCHED**

Minimum documentation searched (classification system followed by classification symbols)

H04L 1/00(2006.01); H04B 7/04(2006.01); H04B 7/06(2006.01); H04L 12/911(2013.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 채널 상태 정보(channel state information, CSI), 보고(report), 설정 정보(setting information), 제어 정보(control information), 시점(timing)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2018-212530 A1 (LG ELECTRONICS INC.) 22 November 2018 (2018-11-22)<br>    See claims 1-2. | 1-17 |
| A | KR 10-2018-0081734 A (QUALCOMM INCORPORATED) 17 July 2018 (2018-07-17)<br>    See paragraphs [0108]-[0112]; and figure 10. | 1-17 |
| A | KR 10-2019-0104204 A (LG ELECTRONICS INC.) 06 September 2019 (2019-09-06)<br>    See paragraphs [0317]-[0341]. | 1-17 |
| A | KR 10-2016-0099626 A (LG ELECTRONICS INC.) 22 August 2016 (2016-08-22)<br>    See paragraphs [0239]-[0286]; and figures 18-19b. | 1-17 |
| A | SHEHZAD, Muhammad Karam et al. Dealing with CSI Compression to Reduce Losses and Overhead: An Artificial Intelligence Approach. 2021 IEEE International Conference on Communications Workshops (ICC Workshops). 09 July 2021.<br>    See section IV; and figure 1. | 1-17 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **17 October 2022** | **19 October 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

| International application No. |
| --- |
| **PCT/KR2022/009647** |

| Patent document cited in search report | | | Publication date (day/month/year) | Patent family member(s) | | | Publication date (day/month/year) |
| --- | --- | --- | --- | --- | --- | --- | --- |
| WO | 2018-212530 | A1 | 22 November 2018 | EP | 3614719 | A1 | 26 February 2020 |
| | | | | US | 11121754 | B2 | 14 September 2021 |
| | | | | US | 2020-0099435 | A1 | 26 March 2020 |
| KR | 10-2018-0081734 | A | 17 July 2018 | CN | 108352885 | A | 31 July 2018 |
| | | | | EP | 3375106 | A1 | 19 September 2018 |
| | | | | ES | 2875152 | T3 | 08 November 2021 |
| | | | | JP | 2019-501569 | A | 17 January 2019 |
| | | | | US | 10200102 | B2 | 05 February 2019 |
| | | | | US | 2017-0141831 | A1 | 18 May 2017 |
| | | | | WO | 2017-083008 | A1 | 18 May 2017 |
| KR | 10-2019-0104204 | A | 06 September 2019 | CA | 3053235 | A1 | 16 August 2018 |
| | | | | CN | 110495207 | A | 22 November 2019 |
| | | | | EP | 3582538 | A1 | 18 December 2019 |
| | | | | JP | 2020-508005 | A | 12 March 2020 |
| | | | | US | 2020-0036424 | A1 | 30 January 2020 |
| | | | | US | 2022-0045731 | A1 | 10 February 2022 |
| | | | | WO | 2018-147676 | A1 | 16 August 2018 |
| KR | 10-2016-0099626 | A | 22 August 2016 | CN | 106233646 | A | 14 December 2016 |
| | | | | CN | 106233647 | A | 14 December 2016 |
| | | | | EP | 2938133 | A1 | 28 October 2015 |
| | | | | EP | 2938134 | A1 | 28 October 2015 |
| | | | | EP | 3506685 | A1 | 03 July 2019 |
| | | | | JP | 2017-513295 | A | 25 May 2017 |
| | | | | JP | 2017-517186 | A | 22 June 2017 |
| | | | | JP | 2019-205170 | A | 28 November 2019 |
| | | | | KR | 10-2016-0099627 | A | 22 August 2016 |
| | | | | TW | 201541883 | A | 01 November 2015 |
| | | | | TW | 201607349 | A | 16 February 2016 |
| | | | | US | 2015-0312784 | A1 | 29 October 2015 |
| | | | | US | 2015-0312789 | A1 | 29 October 2015 |
| | | | | US | 2017-0230852 | A1 | 10 August 2017 |
| | | | | US | 2017-0245205 | A1 | 24 August 2017 |
| | | | | US | 2018-0343576 | A1 | 29 November 2018 |
| | | | | WO | 2015-163633 | A1 | 29 October 2015 |
| | | | | WO | 2015-163634 | A1 | 29 October 2015 |

Form PCT/ISA/210 (patent family annex) (July 2022)